# EUROPEAN PATENT APPLICATION

(11) **EP 4 790 917 A1**
(43) Date of publication of application: **12.08.2026**
(21) Application number: 24887916.5
(22) Date of filing: 05.11.2024
(51) Int. Cl.: H04B 7/185

(54) **COMMUNICATION METHOD AND APPARATUS, TERMINAL DEVICE, AND NETWORK DEVICE**

(30) Priority: 06.11.2023 CN 202311468964
(71) Applicant: HUAWEI TECHNOLOGIES CO., LTD., Shenzhen 518129 (CN)
(72) Inventor: LUO, Hejia, Shenzhen, Guangdong 518129 (CN); ZHOU, Jianwei, Shenzhen, Guangdong 518129 (CN); YU, Tianhang, Shenzhen, Guangdong 518129 (CN); WANG, Jun, Shenzhen, Guangdong 518129 (CN)
(74) Representative: Thun, Clemens
(86) International application number: PCT/CN2024/129815
(87) International publication number: WO 2025/098304

(57) **Abstract**

This application discloses a communication method and apparatus, a terminal device, and a network device, relating to the field of communication technologies. To improve phase difference calibration precision and avoid phase difference calibration maintenance difficulty, this application takes into consideration that high-precision calibration relies on measurement and feedback of the terminal device, so that the network device performs high-precision phase difference calibration based on the feedback. Specifically, the terminal device measures a pilot signal of each of one or more network devices, to obtain a timing drift rate and/or a timing offset corresponding to each pilot signal, and then feeds back these timing drift rates and/or timing offsets to the one or more network devices. The one or more network devices may perform resampling rate adjustment and/or timing adjustment on downlink signals based on these timing drift rates and/or timing offsets, to implement phase-level calibration in multi-satellite communication. In addition, these adjusted downlink signals can be coherently superposed after arriving at the terminal device, thereby improving communication quality through coherent superposition.

## Description

This application claims priority to Chinese Patent Application No. 202311468964.4, filed with the China National Intellectual Property Administration on November 6, 2023, and entitled "COMMUNICATION METHOD AND APPARATUS, TERMINAL DEVICE, AND NETWORK DEVICE", which is incorporated herein by reference in its entirety.

### TECHNICAL FIELD

This application relates to the field of communication technologies, and in particular, to a communication method and apparatus, a terminal device, and a network device.

### BACKGROUND

In multi-transmission and reception point (multi-transmission and reception point, multi-TRP) communication in terrestrial cellular systems, a frequency offset difference between a terminal device and different TRPs is relatively small, and there is no requirement for phase-level calibration among the TRPs.

However, in non-terrestrial cellular systems (for example, non-terrestrial communication network (non-terrestrial network, NTN) systems), a frequency offset difference between the terminal device and different satellites is relatively large, and the large frequency offset difference causes a timing drift rate difference between the terminal device and the different satellites. In addition, a timing drift rate difference between the satellites causes a phase difference between the terminal device and the different satellites. Therefore, phase-level calibration needs to be performed in the non-terrestrial cellular systems, and how to perform phase-level calibration needs to be further studied.

### SUMMARY

In multi-TRP (multi-TRP) communication in terrestrial cellular systems, high-precision calibration typically needs to be performed on transmission frequencies, timing, initial phases, and the like of a plurality of TRPs, to coherently superpose signals arriving at a same terminal device from the plurality of TRPs. In addition, TRPs in the terrestrial cellular system are typically stationary. A frequency difference between the terminal device and different TRPs is caused by an intrinsic signal difference, resulting in a small frequency offset difference with a typical value ranging from 0.1 ppm to 1 ppm. In addition, frequency offset calibration may be performed in a relatively simple manner. For example, the TPR shifts a spectrum of a transmit signal to implement frequency offset calibration. In addition, when a temperature remains stable, a frequency drift of the TRP can be sufficiently small to be neglected. Therefore, once the frequency offset of the signal is calibrated, the calibration state can be maintained over a relatively long period of time. In conclusion, in multi-TRP communication scenarios of the terrestrial cellular systems, a frequency offset difference is small, and there is no requirement for phase-level calibration.

Different from that in the multi-TRP communication in the terrestrial cellular systems, there is a large frequency offset difference between the terminal device and different satellites in multi-satellite communication. In this case, if frequency offset calibration is performed by using a spectrum shift method, even if phase, frequency, and timing alignment are implemented at specific time, signals arriving at the terminal device from different satellites still immediately generate a timing drift rate difference due to the large frequency offset difference. In addition, the timing drift rate difference between the terminal device and the different satellites causes a new phase difference, resulting in a calibration failure. For example, when only a frequency offset difference and an initial phase difference between the satellites are compensated, a phase difference between the satellites rapidly increases with time, resulting in a calibration failure. In conclusion, a larger frequency offset difference in the multi-satellite communication indicates a faster phase difference increase. Therefore, phase-level calibration needs to be performed.

Maintenance time of phase difference calibration between the terminal device and the different satellites is greatly affected by the timing drift rate difference, and the timing drift rate difference sensed by the terminal device may be determined based on a frequency offset of a satellite device and a channel frequency offset. However, an actual value of the frequency offset of the satellite device cannot be accurately obtained, and precision of the channel frequency offset is limited by an ephemeris and precision of a global navigation satellite system (global navigation satellite system, GNSS) of the terminal device. As a result, precision of the timing drift rate difference sensed by the terminal device is poor, and phase difference calibration precision is also poor.

In embodiments, it is considered that high-precision calibration relies on measurement and feedback of the terminal device, to improve phase difference calibration precision and avoid phase difference calibration maintenance difficulty caused by the timing drift rate difference, so that the network device can perform high-precision phase difference calibration based on the feedback of the terminal device.

During specific implementation, in the multi-satellite communication, the terminal device may measure a measurement signal of each of one or more network devices, to obtain a timing drift rate and/or a timing offset corresponding to each measurement signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at the terminal device, to improve communication quality through coherent superposition.

In a possible implementation, the measurement signal includes at least one of a pilot signal (pilot signal), a downlink reference signal (downlink reference signal), a synchronization signal block (SSB), or the like. The downlink reference signal includes at least one of a channel state information reference signal (channel state information reference signal, CSI-RS), a phase tracking reference signal (phase tracking reference signal, PT-RS), or the like.

In this application, a pilot signal is used as an example to describe implementation of phase-level calibration in multi-satellite communication and implementation of coherent superposition from the following aspects.

According to a first aspect, a communication method is provided in this application, including:

A terminal device obtains configuration information.

The terminal device measures at least one pilot signal based on the configuration information, to obtain at least one timing drift rate and/or at least one timing offset, where the at least one timing drift rate and/or the at least one timing offset are/is in a one-to-one correspondence with the at least one pilot signal, and each of the at least one pilot signal corresponds to one network device.

The terminal device sends first feedback information and/or second feedback information, where the first feedback information indicates the at least one timing drift rate, and the second feedback information indicates the at least one timing offset.

It can be learned that in multi-satellite communication, the terminal device may measure a pilot signal of each of one or more network devices, to obtain a timing drift rate and/or a timing offset corresponding to each pilot signal, and then feed back these timing drift rates and/or timing offsets to the one or more network devices, to implement phase-level calibration in the multi-satellite communication.

According to a second aspect, a communication method is provided in this application, including:

A network device sends a first pilot signal.

The network device receives first feedback information and/or second feedback information, where the first feedback information indicates at least one timing drift rate, the second feedback information indicates at least one timing offset, the at least one timing drift rate and/or the at least one timing offset are/is in a one-to-one correspondence with at least one pilot signal, each of the at least one pilot signal corresponds to one network device, and the at least one pilot signal includes the first pilot signal.

The network device performs resampling and/or timing adjustment on a downlink signal based on the first feedback information and/or the second feedback information.

It can be learned that one or more network devices may perform resampling rate adjustment and/or timing adjustment on to-be-delivered downlink signals based on these timing drift rates and/or timing offsets, to implement phase-level calibration in multi-satellite communication. In addition, by performing resampling rate adjustment and/or timing adjustment on a downlink signal of each of the one or more network devices, adjusted downlink signals can be coherently superposed after arriving at a terminal device, to improve communication quality through coherent superposition.

In some possible implementations, configuration information is carried in at least one of higher layer signaling (for example, radio resource control (radio resource control, RRC) signaling or medium access control (medium access control, MAC) signaling), system information (system information, SI), or downlink control information (downlink control information, DCI). In this way, a corresponding network configuration is performed on a measurement process, so that the terminal device performs corresponding measurement behavior based on the network configuration.

In some possible implementations, the configuration information includes: first information, used to configure a format of the at least one pilot signal;
second information, used to configure a measurement window;
third information, used to configure a feedback manner of the at least one timing drift rate; or
fourth information, used to configure a feedback manner of the at least one timing offset.

In this way, configuration content configured by the network device for the terminal device in a configuration process includes at least one of the following: a configuration of the format of the pilot signal, a configuration of the measurement window, a configuration of the feedback manner of the timing drift rate, or a configuration of the feedback manner of the timing offset.

It should be noted that when the network device configures different configuration content for the terminal device for measurement, the different configuration content may be carried in a same piece of higher layer signaling, may be carried in a plurality of pieces of higher layer signaling, may be completed in a same procedure (for example, a resource scheduling procedure), may be completed in different procedures, may be sequentially obtained in a time sequence, or may be simultaneously obtained in a time sequence. This is not specifically limited. The following describes the foregoing configuration content in detail.

The configuration of the format of the pilot signal may be understood as that the network device configures, for the terminal device by using the higher layer signaling, a format of a pilot signal of each of the one or more network devices in the measurement process. In this way, the terminal device may learn of, based on the format of the pilot signal, the pilot signal that needs to be measured.

In some possible implementations, the format of the pilot signal may include at least one of the following: a sequence of the pilot signal, a time-frequency resource position of the pilot signal, or a port of the pilot signal.

The sequence of the pilot signal may be referred to as a pilot sequence, is a sequence including a series of known symbols, and is used for channel estimation and phase calibration.

The time-frequency resource position of the pilot signal may be a distribution status of the pilot signal in time domain and frequency domain. The pilot signal is usually arranged in a specific slot or subcarrier, so that a receive end can perform channel estimation and synchronization calibration.

The port of the pilot signal may be an antenna port to which the pilot signal is allocated in a multiple-input multiple-output (MIMO) system. In the MIMO system, a plurality of antennas are used to send and receive signals, to improve a capacity and reliability of the system. The pilot signal is used for channel estimation and phase calibration, so that the receive end can perform optimized signal processing.

The configuration of the measurement window may be understood as that the network device configures, for the terminal device, a measurement window required in the measurement process. In this way, the terminal device only needs to perform measurement in the measurement window, to avoid continuous measurement.

The measurement window may be a time period, and the terminal device measures the pilot signal of each of the one or more network devices in the time period, to avoid continuous measurement.

An objective of introducing the measurement window in this application is that the terminal device can obtain a stable timing drift rate and/or timing offset through measurement in the measurement window, to avoid continuous measurement. To ensure that the terminal device can obtain the stable timing drift rate and/or timing offset through measurement in the measurement window, in this application, the following may be defined:

In the measurement window, the at least one pilot signal satisfies at least one of the following: a carrier phase of the at least one pilot signal keeps continuous, downlink timing of the at least one pilot signal keeps continuous, a frequency of the at least one pilot signal keeps continuous, or a sampling rate of the at least one pilot signal keeps continuous. In addition, when the terminal device measures a timing drift rate in the measurement window, at least one of the following is satisfied: downlink timing keeps continuous, a frequency offset compensation amount remains unchanged, or a sampling rate remains unchanged.

This is to ensure that the terminal device can stably receive and process the pilot signal, to perform accurate channel estimation and demodulation operations.

In a possible implementation, the second information includes the format of the at least one pilot signal associated with the measurement window.

To ensure that the terminal device can learn of that some pilot signals need to be measured in the measurement window, in a process in which the network device configures the measurement window for the terminal device, the network device configures an association between the format of the pilot signal of each of the one or more network devices and the measurement window, and configures the association for the terminal device by using the higher layer signaling. In this way, the terminal device may measure, in the measurement window, the pilot signal associated with the measurement window.

In addition, the format of the pilot signal associated with the configured measurement window includes a format of a reference pilot, for example, a port of the reference pilot. In other words, the network device notifies the terminal device that a pilot signal in the pilot signal associated with the measurement window is a pilot signal. The pilot signal may be used to determine a reference value of the timing drift rate and/or the timing offset, to reduce a feedback amount of a timing drift rate and/or the timing offset by using the reference value, thereby reducing signaling overheads or the like during feedback.

In a possible implementation, the second information includes a start position of the measurement window.

The start position of the measurement window may be start time of the measurement window. The start position of the measurement window describes when the measurement window needs to start so that the pilot signal can be correctly captured and measured, and channel state estimation and adjustment can be performed. The start position of the measurement window may be configured by the network device, and is usually selected based on factors such as different communication scenarios and user requirements.

For example, the network device may directly configure a first symbol in a slot in a radio frame as the start position of the measurement window.

For another example, the network device may configure an offset (offset), and the offset indicates a time offset between a receiving position of the configuration information (or the second information) and the start position of the measurement window. In this way, because the terminal device can learn of the receiving position of the configuration information, the terminal device can determine the start position of the measurement window based on the receiving position of the configuration information and the offset.

In a possible implementation, the second information includes a length of the measurement window.

The length of the measurement window may be duration of the measurement window, and is used to describe when the measurement window ends. The length of the measurement window is usually configured by the network device and needs to be selected based on a specific application scenario and system requirement.

For example, in a case of high-speed movement, a shorter measurement window may be selected, to perform channel estimation and measurement more in a more timely manner.

In a possible implementation, the second information includes an end position of the measurement window.

The end position of the measurement window may be end time of the measurement window. The end position of the measurement window may be usually calculated based on the start position and the length of the measurement window, or may be directly configured by the network device. When the end position of the measurement window is reached, the terminal device stops a measurement operation, and feeds back a measurement result to the network device.

For example, the network device may directly configure a last symbol in a slot in a radio frame as the end position of the measurement window.

In a possible implementation, the second information includes a periodicity of the measurement window.

The periodicity of the measurement window may be a time period in which measurement needs to be performed once. The periodicity of the measurement window may be usually implemented through network configuration. For example, measurement is performed every second, or measurement is performed every 5 milliseconds. In addition, the periodicity of the measurement window may be selected based on a specific application scenario and system requirement, to better estimate and measure a channel state.

In a possible implementation, the second information includes a timing reference point associated with the measurement window.

The timing reference point may be understood as a time-domain position associated with the measurement window. The time-domain position of the timing reference point may be in the measurement window, or may be outside the measurement window.

In addition, the timing reference point may be used to calculate a timing offset of the pilot signal at the timing reference point, and is specifically described in the following "measurement process", to resolve a problem of ambiguity in feedback and interpretation caused by a time-varying timing drift.

Optionally, the time-domain position of the timing reference point may be represented by a symbol. In other words, the time-domain position of the timing reference point is at a symbol level. For example, the network device configures a symbol in a slot in a radio frame as the timing reference point.

In this way, in comparison with a slot level, the time-domain position of the timing reference point at the symbol level has a smaller granularity, to facilitate calculation of the timing offset of the pilot signal at the timing reference point.

In some possible implementations, the feedback manner of the timing offset includes absolute feedback and relative feedback.

The absolute feedback means that the terminal device directly sends a measurement value of the timing offset to the network device, to improve feedback efficiency, so that the network device performs corresponding clock compensation, adjustment, and the like based on the measurement value.

The relative feedback means that the terminal device sends a difference between the measurement value of the timing offset and a reference value to the network device. In this manner, signaling overheads can be reduced because only one difference instead of a complete measurement value needs to be transmitted. The network device may calculate an actual timing offset based on the reference value and the difference, and make corresponding adjustment.

In some possible implementations, the at least one timing offset includes at least one of the following: a timing offset corresponding to at least one pilot symbol of each of the at least one pilot signal, an accumulation of timing offsets corresponding to a plurality of pilot symbols of each of the at least one pilot signal, or a timing offset corresponding to each of the at least one pilot signal on a symbol of a timing reference point.

For example, a timing offset corresponding to a pilot symbol is represented as follows: $TOA \left(i\right) = R \left(i\right) ⋅ exp \left(-j2{πf}_{d}{T}_{s}i\right) .$

Herein, *i* represents an index of a received pilot symbol, *TOA*(*i*) represents a timing offset corresponding to an *i*^{th} received pilot symbol, *R*(*i*) represents the received pilot symbol, *f_{d}* represents a frequency offset in a channel, and *T_{S}* represents a sampling periodicity.

The accumulation of the timing offsets corresponding to the plurality of pilot symbols of the pilot signal is represented as follows: $TOA = arg max \left({\sum }_{i = 0}^{N - 1} TOA \left(i\right)\right) .$

Herein, *N* represents a quantity of symbols, and *TOA* represents an accumulation of timing offsets corresponding to *N* pilot symbols.

In a possible implementation, the timing offset corresponding to each of the at least one pilot signal on the symbol of the timing reference point is determined based on a moment at which the symbol of the timing reference point is located, timing offsets respectively corresponding to at least two pilot symbols of each of the at least one pilot signal, or moments at which the at least two pilot symbols are located.

For example, for the timing offset corresponding to the pilot signal on the symbol of the timing reference point, because the terminal device may obtain, through measurement, the timing offsets corresponding to the at least two pilot symbols of the pilot signal, the terminal device may perform linear fitting on the timing offsets corresponding to the at least two pilot symbols, to obtain a linear fitting straight line. In this case, a timing offset corresponding to the symbol of the timing reference point is obtained through calculation on the linear fitting straight line, to obtain the timing offset corresponding to the pilot signal on the symbol of the timing reference point.

In a possible implementation, the timing drift rate corresponding to the at least one pilot signal is determined based on timing offsets respectively corresponding to two consecutive pilot symbols of each of the at least one pilot signal and a time interval between the two consecutive pilot symbols.

In this way, the terminal device may calculate a ratio of a difference between timing offsets corresponding to the two consecutive pilot symbols to the time interval between the two consecutive pilot symbols, to obtain the timing drift rate corresponding to the pilot signal. This is easy to implement.

In a possible implementation, if the third information indicates an absolute feedback manner, the terminal device directly sends a measurement value of the timing drift rate to the network device. In this case, the first feedback information includes a timing drift rate that corresponds to a pilot signal of one network device and that needs to be fed back, or the timing drift rate corresponding to each pilot signal.

In addition, in the absolute feedback manner, the timing drift rate corresponding to each pilot signal may be represented by using a sampling rate proportion relationship. In this way, the terminal device may perform, by using the sampling rate proportion relationship, absolute feedback on the timing drift rate corresponding to each pilot signal.

In a possible implementation, if the third information indicates a relative feedback manner, the terminal device sends a difference between the measurement value of the timing drift rate and a reference value to the network device. In this case, the first feedback information includes a difference that is between the timing drift rate corresponding to the pilot signal of one network device and a reference timing drift rate and that needs to be fed back, or a difference between the timing drift rate corresponding to each pilot signal and the reference timing drift rate.

In a possible implementation, the reference timing drift rate is a reference value configured or preconfigured in a network. In other words, the network device configures a reference value for the terminal device to implement relative feedback.

In a possible implementation, the reference timing drift rate is a timing drift rate corresponding to a reference pilot signal in the at least one pilot signal. In other words, the network device configures a pilot signal in these pilot signals as a reference pilot signal for the terminal device, so that the terminal device uses a measurement value of a timing drift rate corresponding to the reference pilot signal as the reference value to implement relative feedback.

In a possible implementation, if the fourth information indicates the absolute feedback manner, the terminal device directly sends the measurement value of the timing offset to the network device. In this case, the second feedback information includes a timing offset that corresponds to the pilot signal of one network device and that needs to be fed back, or the timing offset corresponding to each pilot signal.

In a possible implementation, if the fourth information indicates the relative feedback manner, the terminal device sends a difference between the measurement value of the timing offset and a reference value to the network device. In this case, the second feedback information includes a difference that is between the timing offset corresponding to the pilot signal of one network device and a reference timing offset and that needs to be fed back, or a difference between the timing offset corresponding to each pilot signal and the reference timing offset.

In a possible implementation, the reference timing offset is a reference value configured or preconfigured in the network. In other words, the network device configures a reference value for the terminal device to implement relative feedback.

In a possible implementation, the reference timing offset is a timing offset corresponding to a reference pilot signal in the at least one pilot signal. In other words, the network device configures a pilot signal in these pilot signals as a reference pilot signal for the terminal device, so that the terminal device uses a measurement value of a timing offset corresponding to the reference pilot signal as the reference value to implement relative feedback.

According to a third aspect, a communication apparatus is provided in this application, including:
an obtaining unit, configured to obtain configuration information;
a measurement unit, configured to measure at least one pilot signal based on the configuration information, to obtain at least one timing drift rate and/or at least one timing offset, where the at least one timing drift rate and/or the at least one timing offset are/is in a one-to-one correspondence with the at least one pilot signal, and each of the at least one pilot signal corresponds to one network device; and
a sending unit, configured to send first feedback information and/or second feedback information, where the first feedback information indicates the at least one timing drift rate, and the second feedback information indicates the at least one timing offset.

In a possible implementation, the configuration information includes first information used to configure a format of the at least one pilot signal. In this way, the first information is used to implement a network configuration of a format of a pilot signal of each network device.

In a possible implementation, the configuration information includes second information used to configure a measurement window. In this way, the second information is used to implement a network configuration of the measurement window.

In a possible implementation, the configuration information includes third information used to configure a feedback manner of the at least one timing drift rate. In this way, the third information is used to implement a network configuration of the feedback manner of the at least one timing drift rate.

In a possible implementation, the configuration information includes fourth information used to configure a feedback manner of the at least one timing offset. In this way, the fourth information is used to implement a network configuration of the feedback manner of the at least one timing offset.

In a possible implementation, the second information includes the format of the at least one pilot signal associated with the measurement window. To ensure that a terminal device can learn of that some pilot signals need to be measured in the measurement window, in a process in which a network device configures the measurement window for the terminal device, the network device configures an association between a format of a pilot signal of each of one or more network devices and the measurement window, and configures the association for the terminal device by using higher layer signaling. In this way, the terminal device may measure, in the measurement window, the pilot signal associated with the measurement window.

In a possible implementation, the second information includes a start position of the measurement window. In this way, the second information is used to implement a network configuration of the start position of the measurement window.

In a possible implementation, the second information includes a length of the measurement window. In this way, the second information is used to implement a network configuration of the length of the measurement window.

In a possible implementation, the second information includes an end position of the measurement window. In this way, the second information is used to implement a network configuration of the end position of the measurement window.

In a possible implementation, the second information includes a periodicity of the measurement window. In this way, the second information is used to implement a network configuration of the periodicity of the measurement window.

In a possible implementation, the second information includes a timing reference point associated with the measurement window. In this way, the second information is used to implement a network configuration of the timing reference point.

In a possible implementation, in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

This is to ensure that the terminal device can stably receive and process the pilot signal, to perform accurate channel estimation and demodulation operations.

In a possible implementation, when the terminal device performs measurement in the measurement window, at least one of the following is satisfied: downlink timing keeps continuous, a frequency offset compensation amount remains unchanged, or a sampling rate remains unchanged.

This is to ensure that the terminal device can stably receive and process the pilot signal, to perform accurate channel estimation and demodulation operations.

In a possible implementation, the format of the at least one pilot signal includes at least one of the following: a sequence of the at least one pilot signal, a time-frequency resource position of the at least one pilot signal, or a port of the at least one pilot signal.

In a possible implementation, the third information indicates a first absolute feedback manner, and the first absolute feedback manner indicates that the first feedback information includes the at least one timing drift rate. In this way, the terminal device directly sends a measurement value of the timing drift rate to the network device, to improve feedback efficiency, so that the network device performs corresponding clock compensation, adjustment, and the like based on the measurement value.

In a possible implementation, the third information indicates a first relative feedback manner, and the first relative feedback manner indicates that the first feedback information includes a difference between the at least one timing drift rate and a reference timing drift rate. In this way, the terminal device sends a difference between the measurement value of the timing drift rate and a reference value to the network device. In this manner, signaling overheads can be reduced because only one difference instead of a complete measurement value needs to be transmitted. The network device may calculate an actual timing drift rate based on the reference value and the difference, and make corresponding adjustment.

In a possible implementation, the at least one timing drift rate is represented by using a sampling rate proportion relationship. In this way, the terminal device may perform, by using the sampling rate proportion relationship, absolute feedback on the timing drift rate corresponding to each pilot signal.

In a possible implementation, the reference timing drift rate is a first reference value configured or preconfigured in a network; or
the reference timing drift rate is a timing drift rate corresponding to a reference pilot signal in the at least one pilot signal.

In other words, the network device configures a pilot signal in these pilot signals as a reference pilot signal for the terminal device, so that the terminal device uses a measurement value of a timing drift rate corresponding to the reference pilot signal as the reference value to implement relative feedback.

In a possible implementation, the fourth information indicates a second absolute feedback manner, and the second absolute feedback manner indicates that the second feedback information includes the at least one timing offset. In this way, the terminal device directly sends a measurement value of the timing offset to the network device, to improve feedback efficiency, so that the network device performs corresponding clock compensation, adjustment, and the like based on the measurement value.

In a possible implementation, the fourth information indicates a second relative feedback manner, and the second relative feedback manner indicates that the second feedback information includes a difference between the at least one timing offset and a reference timing offset. In this way, the terminal device sends a difference between the measurement value of the timing offset and a reference value to the network device. In this manner, signaling overheads can be reduced because only one difference instead of a complete measurement value needs to be transmitted. The network device may calculate an actual timing offset based on the reference value and the difference, and make corresponding adjustment.

In a possible implementation, the reference timing offset is a second reference value configured or preconfigured in the network; or
the reference timing offset is a timing offset corresponding to the reference pilot signal in the at least one pilot signal.

In other words, the network device configures a pilot signal in these pilot signals as a reference pilot signal for the terminal device, so that the terminal device uses a measurement value of a timing offset corresponding to the reference pilot signal as the reference value to implement relative feedback.

In a possible implementation, a timing offset corresponding to the at least one pilot signal includes:
a timing offset corresponding to at least one pilot symbol of each of the at least one pilot signal; and/or
a timing offset corresponding to each of the at least one pilot signal on a symbol of a timing reference point.

For example, a timing offset corresponding to a pilot symbol is represented as follows: $TOA \left(i\right) = R \left(i\right) ⋅ exp \left(-j2{πf}_{d}{T}_{s}i\right) .$

Herein, *i* represents an index of a received pilot symbol, *TOA*(*i*) represents a timing offset corresponding to an *i*^{th} received pilot symbol, *R*(*i*) represents the received pilot symbol, *f_{d}* represents a frequency offset in a channel, and *T_{S}* represents a sampling periodicity.

An accumulation of timing offsets corresponding to a plurality of pilot symbols of the pilot signal is represented as follows: $TOA = arg max \left({\sum }_{i = 0}^{N - 1} TOA \left(i\right)\right) .$

Herein, *N* represents a quantity of symbols, and *TOA* represents an accumulation of timing offsets corresponding to *N* pilot symbols.

In a possible implementation, a time-domain position of the timing reference point is represented by a symbol.

In this way, in comparison with a slot level, the time-domain position of the timing reference point at a symbol level has a smaller granularity, to facilitate calculation of a timing offset of a pilot signal at the timing reference point.

In a possible implementation, the timing offset corresponding to each of the at least one pilot signal on the symbol of the timing reference point is determined based on a moment at which the symbol of the timing reference point is located, timing offsets respectively corresponding to at least two pilot symbols of each of the at least one pilot signal, or moments at which the at least two pilot symbols are located.

In this way, for the timing offset corresponding to the pilot signal on the symbol of the timing reference point, because the terminal device may obtain, through measurement, the timing offsets corresponding to the at least two pilot symbols of the pilot signal, the terminal device may perform linear fitting on the timing offsets corresponding to the at least two pilot symbols, to obtain a linear fitting straight line. In this case, a timing offset corresponding to the symbol of the timing reference point is obtained through calculation on the linear fitting straight line, to obtain the timing offset corresponding to the pilot signal on the symbol of the timing reference point.

In a possible implementation, the at least one timing drift rate is determined based on timing offsets respectively corresponding to two consecutive pilot symbols of each of the at least one pilot signal and a time interval between the two consecutive pilot symbols.

In this way, the terminal device may calculate a ratio of a difference between timing offsets corresponding to the two consecutive pilot symbols to the time interval between the two consecutive pilot symbols, to obtain the timing drift rate corresponding to the pilot signal. This is easy to implement.

According to a fourth aspect, a communication apparatus is provided in this application, including:
a sending unit, configured to send a first pilot signal;
a receiving unit, configured to receive first feedback information and/or second feedback information, where the first feedback information indicates at least one timing drift rate, the second feedback information indicates at least one timing offset, the at least one timing drift rate and/or the at least one timing offset are/is in a one-to-one correspondence with at least one pilot signal, each of the at least one pilot signal corresponds to one network device, and the at least one pilot signal includes the first pilot signal; and
an adjustment unit, configured to perform resampling and/or timing adjustment on a downlink signal based on the first feedback information and/or the second feedback information.

In a possible implementation, before sending the first pilot signal, the sending unit 1501 is further configured to send configuration information.

The configuration information includes at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

In a possible implementation, the second information includes at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

In a possible implementation, in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

In a possible implementation, when a terminal device performs measurement in the measurement window, the measurement window is used to indicate that at least one of the following is satisfied: downlink timing keeps continuous, a frequency offset compensation amount remains unchanged, or a sampling rate remains unchanged.

In a possible implementation, the format of the at least one pilot signal includes at least one of the following: a sequence of the at least one pilot signal, a time-frequency resource position of the at least one pilot signal, or a port of the at least one pilot signal.

In a possible implementation, the third information indicates a first absolute feedback manner, and the first absolute feedback manner indicates that the first feedback information includes the at least one timing drift rate; or
the third information indicates a first relative feedback manner, and the first relative feedback manner indicates that the first feedback information includes a difference between the at least one timing drift rate and a reference timing drift rate.

In a possible implementation, the at least one timing drift rate is represented by using a sampling rate proportion relationship.

In a possible implementation, the reference timing drift rate is a first reference value configured or preconfigured in a network; or
the reference timing drift rate is a timing drift rate corresponding to a reference pilot signal in the at least one pilot signal.

In a possible implementation, the fourth information indicates a second absolute feedback manner, and the second absolute feedback manner indicates that the second feedback information includes the at least one timing offset; or
the fourth information indicates a second relative feedback manner, and the second relative feedback manner indicates that the second feedback information includes a difference between the at least one timing offset and a reference timing offset.

In a possible implementation, the reference timing offset is a second reference value configured or preconfigured in the network; or
the reference timing offset is a timing offset corresponding to the reference pilot signal in the at least one pilot signal.

In a possible implementation, the at least one timing offset includes:
a timing offset corresponding to at least one pilot symbol of each of the at least one pilot signal; and/or
a timing offset corresponding to each of the at least one pilot signal on a symbol of a timing reference point.

In a possible implementation, a time-domain position of the timing reference point is represented by a symbol.

According to a fifth aspect, the steps of the method designed in the first aspect are applied to a terminal device.

According to a sixth aspect, the steps of the method designed in the second aspect are applied to a network device.

According to a seventh aspect, a terminal device is provided in this application, including a processor, a memory, and a computer program or instructions stored in the memory, where the processor executes the computer program or the instructions to implement the steps of the method designed in the first aspect.

According to an eighth aspect, a network device is provided in this application, including a processor, a memory, and a computer program or instructions stored in the memory, where the processor executes the computer program or the instructions to implement the steps of the method designed in the second aspect.

According to a ninth aspect, a chip is provided in this application, including a processor, where the processor performs the steps of the method designed in the first aspect or the second aspect.

According to a tenth aspect, a chip module is provided in this application, including a transceiver component and a chip, where the chip includes a processor, and the processor performs the steps of the method designed in the first aspect or the second aspect.

According to an eleventh aspect, a computer-readable storage medium is provided in this application. The computer-readable storage medium stores a computer program or instructions. When the computer program or the instructions are executed, the steps of the method designed in the first aspect or the second aspect are implemented.

According to a twelfth aspect, a computer program product is provided in this application, including a computer program or instructions, where when the computer program or the instructions are executed, the steps of the method designed in the first aspect or the second aspect are implemented. For example, the computer program product may be a software installation package.

For beneficial effects brought by the technical solutions in the third aspect, the fifth aspect, the seventh aspect, and the ninth aspect to the twelfth aspect, refer to the technical effects brought by the technical solution in the first aspect. Details are not described herein again.

For beneficial effects brought by the technical solutions in the second aspect, the fourth aspect, the sixth aspect, and the eighth aspect to the twelfth aspect, refer to the technical effects brought by the technical solution in the second aspect. Details are not described herein again.

### BRIEF DESCRIPTION OF DRAWINGS

FIG. 1 is a diagram of an architecture of an NTN communication system according to an embodiment of this application;
FIG. 2 is a diagram of an architecture of an NTN communication system with a transparent architecture according to an embodiment of this application;
FIG. 3 is a diagram of an architecture of an NTN communication system with a regenerative architecture according to an embodiment of this application;
FIG. 4 is a diagram of an architecture of multi-satellite communication with a transparent architecture according to an embodiment of this application;
FIG. 5 is a diagram of an architecture of multi-satellite communication with a regenerative architecture according to an embodiment of this application;
FIG. 6 is a diagram of a structure of a change relationship between an SNR and a quantity of satellites according to an embodiment of this application;
FIG. 7 is a diagram of a structure of phase-level calibration in multi-satellite communication according to an embodiment of this application;
FIG. 8 is a diagram of a structure of calculating a timing offset according to an embodiment of this application;
FIG. 9 to FIG. 12 are diagrams of another structure of phase-level calibration in multi-satellite communication according to an embodiment of this application;
FIG. 13 is a schematic flowchart of a communication method according to an embodiment of this application;
FIG. 14 is a composition block diagram of functional units of a communication apparatus according to an embodiment of this application;
FIG. 15 is a composition block diagram of functional units of another communication apparatus according to an embodiment of this application;
FIG. 16 is a diagram of a structure of a terminal device according to an embodiment of this application; and
FIG. 17 is a diagram of a structure of a network device according to an embodiment of this application.

### DESCRIPTION OF EMBODIMENTS

It should be understood that the terms such as "first" and "second" in embodiments of this application are intended to distinguish between different objects but do not describe a specific sequence. In addition, terms "include" and "have" and any other variants thereof are intended to cover a non-exclusive inclusion. For example, a process, a method, software, a product, or a device that includes a series of steps or units is not limited to the listed steps or units, but may further include an unlisted step or unit, or may further include another step or unit inherent to the process, the method, the product, or the device.

"Embodiments" in embodiments of this application mean that a particular feature, structure, or characteristic described with reference to embodiments may be included in at least one embodiment of this application. The phrase shown in various positions in the specification may not necessarily refer to a same embodiment, and is not an independent or optional embodiment exclusive from another embodiment. It is explicitly and implicitly understood by a person skilled in the art that embodiments described in the specification may be combined with another embodiment.

In embodiments of this application, "at least one" means one or more, and "a plurality of" means two or more.

The term "and/or" in embodiments of this application describes an association relationship between associated objects and indicates that three relationships may exist. For example, A and/or B may indicate the following three cases: Only A exists, both A and B exist, and only B exists. A and B may be singular or plural. The character "/" may indicate an "or" relationship between the associated objects. In addition, the character "/" may indicate a division sign. For example, A/B indicates dividing A by B.

"At least one of the following items (pieces)" or a similar expression thereof in embodiments of this application indicates any combination of these items, including a single item (piece) or any combination of a plurality of items (pieces). For example, at least one of a, b, or c may indicate the following seven cases: a, b, c, a and b, a and c, b and c, or a, b, and c. Each of a, b, and c may be an element, or may be a set including one or more elements.

In embodiments of this application, "of (of)", "corresponding (corresponding, relevant)", "corresponding (corresponding)", "associated (associated, related)", and "mapped (mapped)" may sometimes be used interchangeably. It should be noted that concepts or meanings expressed by the terms are consistent when differences of the terms are not emphasized.

In embodiments of this application, "network" and "system" may be expressed as a same concept, and a communication system is a communication network.

"Connection" in embodiments of this application means various connection manners such as a direct connection or an indirect connection, for implementing communication between devices. This is not specifically limited.

The following specifically describes related content in technical solutions in embodiments of this application.

### 1. Communication system

The technical solutions in embodiments of this application may be applied to various wireless communication systems, for example, a long term evolution (long term evolution, LTE) system, an advanced long term evolution (advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial communication network (non-terrestrial network, NTN) system, a universal mobile telecommunications system (universal mobile telecommunications system, UMTS), a future communication system, or another communication system.

It should be noted that a conventional communication system supports a limited quantity of connections and is easy to implement. With development of communication technologies, the communication system in this application may not only support a conventional communication system, but also support device to device (device to device, D2D) communication, machine to machine (machine to machine, M2M) communication, machine type communication (machine type communication, MTC), vehicle to vehicle (vehicle to vehicle, V2V) communication, vehicle to everything (vehicle to everything, V2X) communication, narrowband internet of things (narrowband internet of things, NB-IoT) communication, or the like. Therefore, the technical solutions in embodiments of this application may also be applied to the foregoing communication system.

For example, embodiments of this application may be applied to a beamforming (beamforming) deployment scenario, a carrier aggregation (carrier aggregation, CA) deployment scenario, a dual connectivity (dual connectivity, DC) deployment scenario, a standalone (standalone, SA) deployment scenario, or the like.

For another example, embodiments of this application may be applied to a communication scenario of an unlicensed spectrum. In embodiments of this application, the unlicensed spectrum may also be considered as a shared spectrum. Alternatively, embodiments of this application may be applied to a licensed spectrum. The licensed spectrum may also be considered as a non-shared spectrum.

Optionally, the technical solutions in embodiments of this application may be applied to the NTN system, for example, a satellite communication system. For the satellite communication system, a network device usually communicates with a ground terminal device through a satellite.

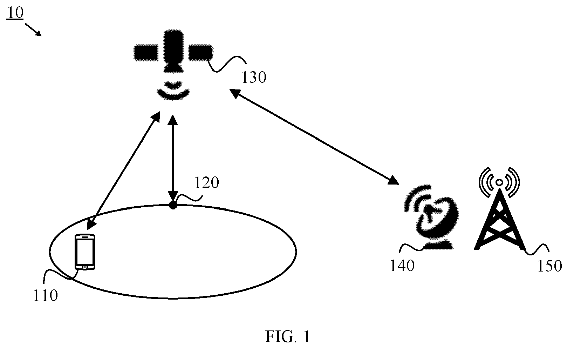

For example, FIG. 1 shows an NTN system according to an embodiment of this application. An NTN communication system 10 may include a terminal device 110, a satellite 130, a non-terrestrial network gateway (NTN gateway) 140, and a network device 150. The terminal device 110, the non-terrestrial network gateway 140, and the network device 150 may be located on the surface of the earth, and the satellite 130 is located in the earth orbit. The satellite 130 may provide a communication service for a geographical region covered by a signal of the satellite 130, and may communicate with the terminal device 110 located in the signal coverage.

The terminal device 110 is located in coverage of a beam or a cell, and the coverage of the beam or the cell includes a reference point (reference point) 120. In addition, a communication link between the terminal device 110 and the satellite 130 is referred to as a service link (service link). A communication link between the satellite 130 and the non-terrestrial network gateway 140 is referred to as a feeder link (feeder link).

It should be noted that the non-terrestrial network gateway 140 and the network device 150 may be integrated into a same device, or may be independent devices. This is not specifically limited.

### [Terminal device]

The terminal device may be a device having a transceiver function, and may also be referred to as a terminal, user equipment (user equipment, UE), a remote terminal device (remote UE), a relay device (relay UE), an access terminal device, a subscriber unit, a subscriber station, a mobile station, a mobile console, a remote station, a mobile device, a user terminal device, an intelligent terminal device, a wireless communication device, a user agent, or a user apparatus. It should be noted that the relay device is a terminal device that can provide a relay forwarding service for another terminal device (including the remote terminal device).

For example, the terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving, a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like.

For another example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a next-generation communication system (for example, an NR communication system), a terminal device in a future evolved public land mobile network (public land mobile network, PLMN), or the like. This is not specifically limited.

Optionally, the terminal device may be deployed on land, including an indoor device, an outdoor device, a handheld device, a wearable device, or a vehicle-mounted device; may be deployed on a water surface (for example, on a ship); or may be deployed in the air (for example, on an airplane, a balloon, or a satellite).

Optionally, the terminal device may include an apparatus having a wireless communication function, for example, a chip system, a chip, or a chip module. For example, the chip system may include a chip, or may include another discrete component.

Optionally, the terminal device in embodiments of this application may be a chip, a chip module, an apparatus, a unit, or the like. This is not specifically limited.

### [Satellite]

The satellite may be a spacecraft of a transparent payload (transparent payload) (or referred to as a bent pipe payload (bent pipe payload)) or regenerative payload (regenerative payload) signal transmitter, namely, a transparent satellite (transparent satellite) or a regenerative satellite (regenerative satellite).

The satellite may have a transparent (transparent) (or referred to as a bent pipe payload (bent pipe payload)) mode and a regenerative (regenerative) mode based on an operating mode or a payload (payload).

When the satellite operates in the transparent mode, the satellite is a spacecraft of a transparent payload signal transmitter, and has a relay forwarding function.

When the satellite operates in the regenerative mode, the satellite has a data processing capability and has functions of a base station (for example, a gNB) or a part of functions of a base station. In this case, the satellite may be considered as a base station.

It should be noted that satellites may be classified into a geostationary earth orbit (geostationary earth orbit, GEO) satellite, a medium earth orbit (medium earth orbit, MEO) satellite, a low earth orbit (low earth orbit, LEO) satellite, a high elliptical orbit (high elliptical orbit, HEO) satellite, and the like based on different orbital altitudes.

An orbital altitude of the GEO satellite is 35,786 km. A main advantage is that the GEO satellite can remain stationary relative to the ground and provide a large coverage area. However, GEO satellite communication has definite disadvantages:
(1) A GEO satellite orbit is far away from the earth, and a free space propagation loss is large, resulting in a tight communication link budget. To increase a transmit/receive gain, the satellite needs to be equipped with an antenna with a large aperture.
(2) A communication transmission delay is long, and a round-trip time may reach about 500 ms, which cannot satisfy requirements of real-time services.
(3) GEO orbital resources are limited, launch costs are high, and coverage cannot be provided for the polar regions of the earth.

An orbital altitude of the MEO satellite ranges from 2000 km to 35,786 km. An advantage is that global coverage can be implemented by using a smaller quantity of satellites. However, the MEO satellite has a higher orbital altitude than the LEO satellite, and a transmission delay is still longer than that of LEO satellite communication. Based on the advantage and the disadvantage of MEO satellite communication, the MEO satellite is mainly used for positioning and navigation.

An orbital altitude of the LEO satellite ranges from 300 km to 2000 km. The orbital altitude of the LEO satellite is lower than that of the MEO satellite and that of the GEO satellite. The LEO satellite has advantages of a short data propagation delay, a small transmission loss, and lower launch costs. Therefore, the LEO satellite communication has also gained wide attention in recent years.

An orbital altitude of the HEO satellite ranges from 400 km to 50,000 km.

### [Non-terrestrial network gateway]

The non-terrestrial network gateway may be an earth station or a gateway located on the ground, and can provide sufficient radio frequency (radio frequency, RF) power and RF sensitivity, to implement a connection between a ground device (for example, a network device) and a satellite. The non-terrestrial network gateway is a node at a transport network layer (transport network layer, TNL).

### [Network device]

The network device may be a device having a transceiver function, and may be configured to communicate with a terminal device.

Optionally, the network device may be configured to perform radio resource management (radio resource management, RRM), quality of service (quality of service, QoS) management, data compression and encryption, data sending and receiving, or the like on an air interface side.

Optionally, the network device may include a base station (base station, BS) in a communication system or a device that is deployed in a radio access network (radio access network, RAN) and that is configured to provide a wireless communication function. In other words, the network device may include a device in the RAN.

For example, the device in the RAN may include an evolved NodeB (evolved NodeB, eNB or eNodeB) in an LTE communication system, a next-generation evolved NodeB (next-generation evolved NodeB, ng-eNB) in an NR communication system, a next-generation NodeB (next-generation NodeB, gNB) in the NR communication system, a master node (master node, MN) in a dual connectivity architecture, a second node or a secondary node (secondary node, SN) in the dual connectivity architecture, or the like. This is not specifically limited.

Optionally, the network device may include a device in a core network (core network, CN).

For example, the device in the CN may include an access and mobility management function (access and mobility management function, AMF), a user plane function (user plane function, UPF), a session management function (session management function, SMF), or the like.

Optionally, the network device may alternatively be an access point (access point, AP) in a WLAN, a relay station, a communication device in a future evolved PLMN network, a communication device in an NTN network, or the like.

Optionally, the network device may include an apparatus providing a wireless communication function for the terminal device, for example, a chip system, a chip, or a chip module. For example, the chip system may include a chip, or may include another discrete component.

Optionally, the network device may be a transmission and reception point (transmission and reception point, TRP).

Optionally, the network device may communicate with an internet protocol (internet protocol, IP) network, for example, an internet (internet), a private IP network, or another data network.

Optionally, the network device may include one independent node to implement a function of the base station, or may include two or more independent nodes to implement a function of the base station. For example, the network device includes a central unit (central unit, CU) and a distributed unit (distributed unit, DU), for example, a gNB-CU and a gNB-DU. Further, in some other embodiments, the network device may further include an active antenna unit (active antenna unit, AAU). The CU implements a part of functions of the network device, and the DU implements another part of functions of the network device. For example, the CU is configured to: process a non-real-time protocol and service, and implement functions of a radio resource control (RRC) layer, a service data adaptation protocol (service data adaptation protocol, SDAP) layer, and a packet data convergence protocol (packet data convergence protocol, PDCP) layer. The DU is configured to: process a physical layer protocol and a real-time service, and implement functions of a radio link control (radio link control, RLC) layer, a medium access control (MAC) layer, and a physical (physical, PHY) layer. In addition, the AAU may implement a part of physical layer processing functions, radio frequency processing, and a function related to an active antenna. Information at the RRC layer eventually becomes information at the PHY layer or is converted from information at the PHY layer. Therefore, in the network deployment, higher layer signaling (for example, RRC signaling) may be considered as being generated by the CU and sent by the DU, or sent by both the DU and the AAU. It may be understood that the network device may include at least one of the CU, the DU, and the AAU. In addition, the CU may be classified as a RAN device, or the CU may be classified as a core network device. This is not specifically limited.

Optionally, the network device may be any station in a plurality of stations that perform coherent joint transmission (coherent joint transmission, CJT) with the terminal device, a station other than the plurality of stations, or another network device that performs network communication with the terminal device. This is not specifically limited. Multi-station coherent joint transmission may be joint coherent transmission of a plurality of stations, may mean that different data belonging to a same physical downlink shared channel (physical downlink shared channel, PDSCH) is sent to the terminal device from different stations, may mean that a plurality of stations are virtualized into one station for transmission, or may be joint transmission in another manner. A station in the multi-station coherent joint transmission may be a remote radio head (remote radio head, RRH), a transmission and reception point (transmission and reception point, TRP), a network device, or the like. This is not specifically limited.

Optionally, the network device may alternatively be any station in a plurality of stations that perform non-coherent joint transmission (non-coherent joint transmission, NCJT) with the terminal device, a station other than the plurality of stations, or another network device that performs network communication with the terminal device. This is not specifically limited. Multi-station non-coherent joint transmission may be joint non-coherent transmission of a plurality of stations, may mean that different data belonging to a same PDSCH is sent to the terminal device from different stations, may mean that a plurality of stations are virtualized into one station for transmission, or may be non-joint transmission in another manner. A station in the multi-station non-coherent joint transmission may be the RRH, the TRP, the network device, or the like. This is not specifically limited.

Optionally, the network device may provide a service for a cell, and a terminal device in the cell may communicate with the network device by using a transmission resource (for example, a spectrum resource). The cell may be a macro cell (macro cell), a small cell (small cell), a metro cell (metro cell), a micro cell (micro cell), a pico cell (pico cell), a femto cell (femto cell), or the like.

Optionally, the network device in embodiments of this application may be a chip, a chip module, an apparatus, a unit, or the like. This is not specifically limited.

### [NTN system]

Based on the foregoing descriptions, the following describes the NTN system in detail.

Currently, 5G NR has entered a commercial deployment phase from a standardization phase. An NR standard is researched and designed based on characteristics of terrestrial communication, and has a characteristic of providing high-rate, high-reliability, and low-latency communication for a user terminal. Compared with a terrestrial communication system, the NTN system has characteristics such as large coverage and flexible networking.

The NTN system includes devices such as an uncrewed aerial vehicle, a high-altitude platform station (HAPS), and a satellite that are used for networking, to provide services such as data transmission and voice communication for the terminal device. The high-altitude platform station device is generally 8 km to 50 km above the ground. Based on orbital altitudes of satellites, satellite communication systems may be classified into the following three types: a geostationary earth orbit (GEO) satellite communication system, also referred to as a synchronous orbit satellite system; a medium earth orbit (MEO) satellite communication system; and a low earth orbit (LEO) satellite communication system.

In addition, a satellite device is limited by manufacturing and launch costs, and a data processing capability and transmit power on the satellite are also limited. Currently, the NTN system cannot provide, for the terminal device, a communication rate comparable to that of the terrestrial communication system. To break through this limitation and improve an overall signal processing capability and communication throughput of a satellite network, satellite operators are preparing to launch a giant low earth orbit constellation, that is, to increase a quantity of satellites to compensate for a limitation of a communication capability of a single satellite. After the terminal device accesses the NTN system, in a period of time, the terminal device may be "visible" to a plurality of satellites that can communicate with the terminal device. In this case, all the plurality of satellites may provide a communication service for the terminal device. This provides a basic condition for multi-satellite joint transmission.

Based on different payload types, the NTN system has two common architectures: a transparent architecture and a regenerative architecture. Descriptions are separately provided below.

In the transparent architecture, the satellite operates in a transparent mode, and has a relay forwarding function. A non-terrestrial network gateway has functions of a network device (for example, a gNB) or a part of functions of a network device. In this case, the non-terrestrial network gateway may be considered as the network device. Alternatively, the network device and the non-terrestrial network gateway may be separately deployed. In this case, a delay of a feeder link includes two parts: a delay from the satellite to the non-terrestrial network gateway and a delay from the non-terrestrial network gateway to the network device. In the transparent architecture discussed below, a case in which the non-terrestrial network gateway and the network device are deployed together or in close positions is used as an example. When the non-terrestrial network gateway and the network device are far away from each other, the delay of the feeder link is a sum of a delay from the satellite to a gateway and a delay from the gateway to the gNB.

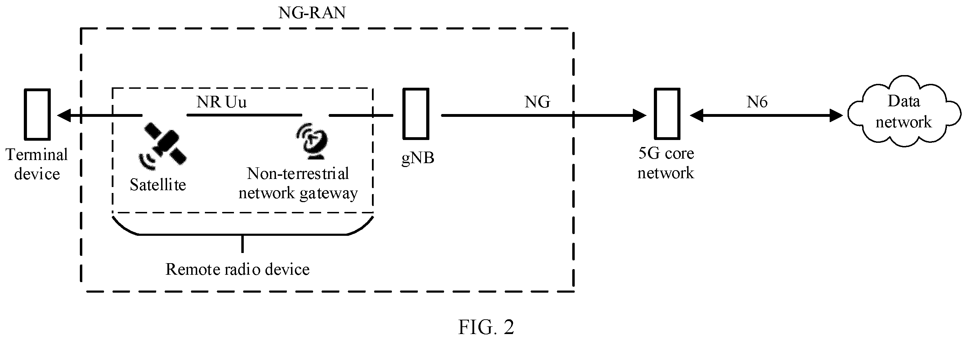

For example, FIG. 2 shows a transparent architecture of an NTN system. In FIG. 2, a terminal device, a non-terrestrial network gateway, and a gNB are located on the surface of the earth, and a satellite is located in the earth orbit. The satellite, the non-terrestrial network gateway, and the gNB form a radio access network (NG-radio access network, NG-RAN). The NG-RAN is connected to a 5G core network through an NG interface, and the 5G core network is connected to a data network through an N6 interface. The satellite and the non-terrestrial network gateway may be considered as remote radio devices, and the satellite and the non-terrestrial network gateway may communicate with each other through an NR Uu interface.

In the regenerative architecture, the satellite operates in a regenerative mode, and has a data processing capability, functions of a network device, or a part of functions of a network device. In this case, the satellite may be considered as the network device.

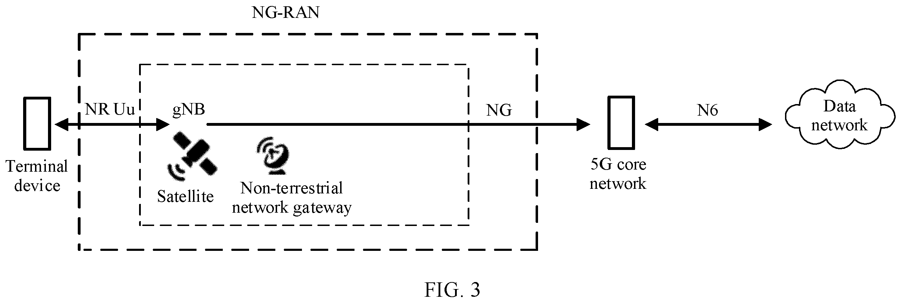

For example, FIG. 3 shows a regenerative architecture of an NTN system. In FIG. 3, a terminal device is located on the surface of the earth, and a satellite and a gNB are located in the earth orbit. The satellite and gNB form an NG-RAN. The NG-RAN is connected to a 5G core network through an NG Uu interface, and the 5G core network is connected to a data network through an N6 interface. The gNB and the terminal device may communicate with each other through an NR Uu interface.

It should be noted that embodiments are applicable to a satellite operating in a transparent mode, or a satellite that switches between a transparent mode and a regenerative mode. In actual deployment, the satellites in FIG. 2 and FIG. 3 may be replaced with other non-terrestrial payloads such as HAPSs.

### 2. Phase-level calibration in multi-satellite communication

### [Multi-satellite communication]

As a constellation scale of satellites increases, it is common that a plurality of satellites are visible at a specific position. In a mid-latitude region, dozens to hundreds of satellites are visible to a terminal device. In an NTN system, there may be a scenario in which a plurality of satellites communicate with a same terminal device. In this case, the scenario is referred to as "multi-satellite communication". The multi-satellite communication also has a transparent architecture and a regenerative architecture.

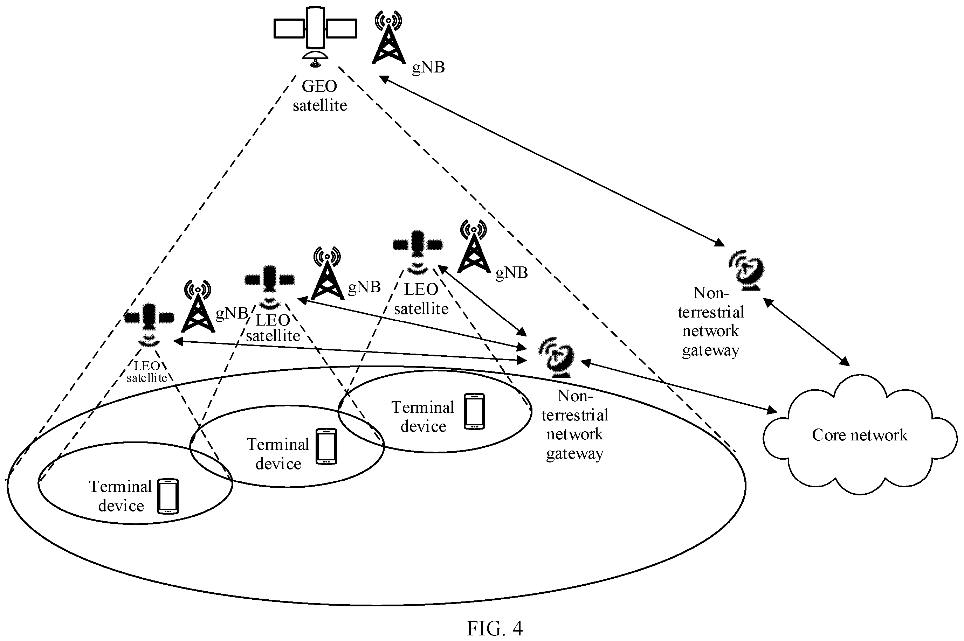

For example, FIG. 4 shows a transparent architecture of multi-satellite communication. In FIG. 4, a terminal device, a non-terrestrial network gateway, and a gNB are located on the surface of the earth, and a GEO satellite and an LEO satellite are located in the earth orbit. In addition, a plurality of LEO satellites may communicate with a same terminal device.

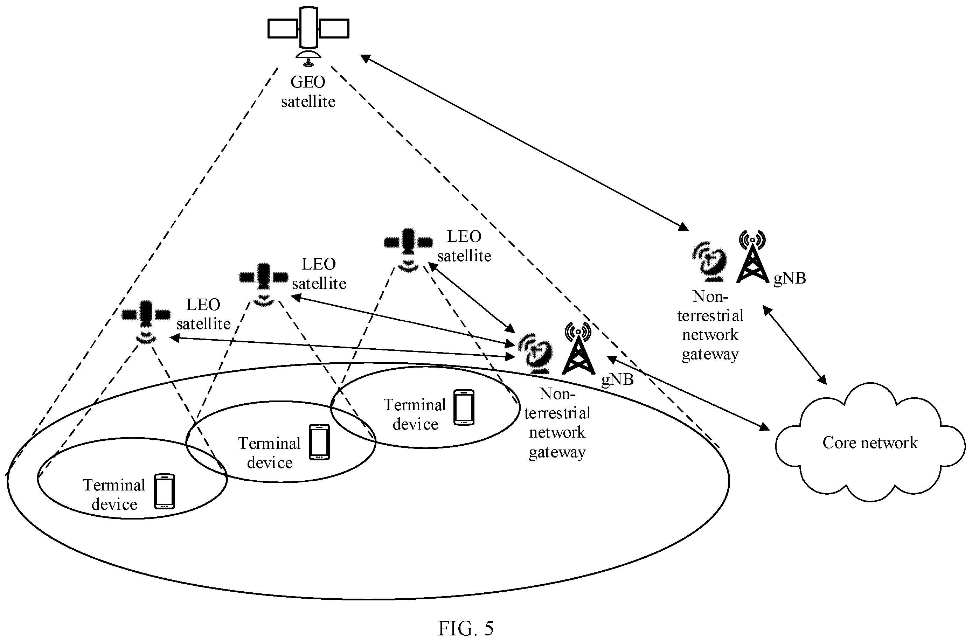

For another example, FIG. 5 shows a regenerative architecture of multi-satellite communication. In FIG. 5, a terminal device is located on the ground of the earth, and a satellite and a gNB are located in the earth orbit. In addition, a plurality of LEO satellites may communicate with a same terminal device.

In addition, the multi-satellite communication has two modes: coherent joint transmission (CJT) and non-coherent joint transmission (NCJT). In the CJT mode, a plurality of satellites perform coherent superposition on the ground, so that the terminal device can simultaneously obtain, due to the plurality of satellites, a gain from an increased antenna aperture and a gain from superposition of a plurality of pieces of transmit energy. In this way, a signal-to-interference-plus-noise ratio (SNR) sensed by the terminal device rapidly increases as a quantity of satellites increases.

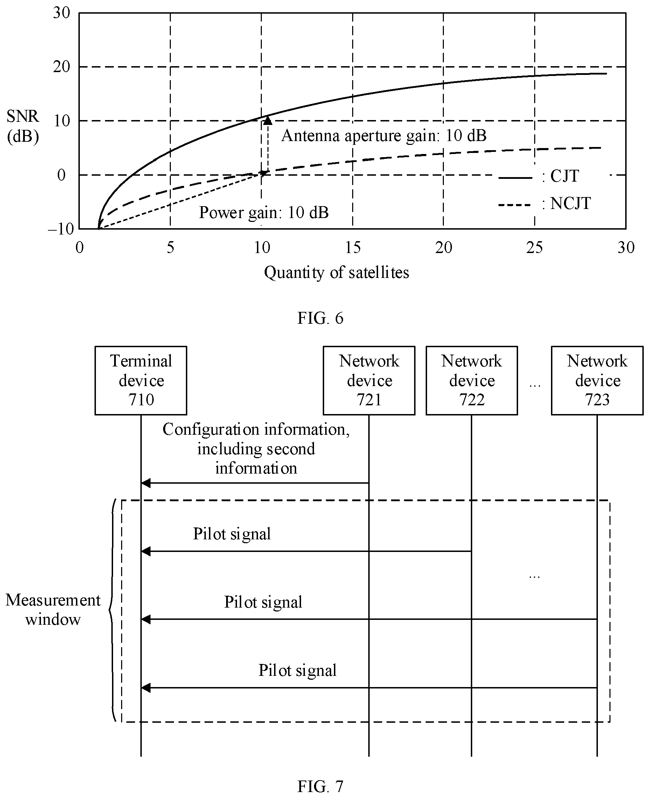

In the NCJT mode, a plurality of satellites perform non-coherent superposition on the ground, so that the terminal device can simultaneously obtain, due to the plurality of satellites, a gain from superposition of a plurality of pieces of transmit energy. For example, as shown in FIG. 6, when an SNR of a single satellite is -10 dB, a multi-satellite equivalent SNR sensed by the terminal device has a change relationship with a quantity of satellites. In an ideal coherent superposition case, an SNR gain of a plurality of satellites is 20*log10*M (M is a quantity of satellites) dB. In a non-coherent superposition case, an SNR gain of a plurality of satellites is 10*log10*M dB. It can be learned that, in comparison with non-coherent superposition, a coherent superposition non-multi-satellite coherent communication mode may obtain a larger superposition gain.

### [Phase-level calibration in multi-satellite communication]

A frequency offset (frequency offset) may be a difference between an actual frequency of a received signal and an expected theoretical frequency. In a communication system, a transmit end and a receive end use respective clocks to generate and sample signals. Due to inevitable inaccuracy, drifts, and the like of clocks, there may be a slight difference between a clock frequency at the transmit end and a clock frequency at the receive end. As a result, an actual frequency of a signal received by the receive end is inconsistent with a theoretical frequency at the transmit end, causing a frequency offset. If the frequency offset is not calibrated and compensated in time, a problem like distortion or an error occurs when the receive end decodes a data signal from the transmit end.

A timing drift (timing drift) rate may be a change speed of a clock frequency. In the communication system, both the transmit end and the receive end have respective clocks for time synchronization. However, the clock frequency may slightly change due to various factors (such as an error of a crystal oscillator, or a temperature change). As a result, the clock frequency at the transmit end is not completely consistent with that at the receive end. A change rate of the clock frequency is the timing drift rate.

A timing offset (timing offset) may be a difference or an offset between a clock of the receive end and a clock of the transmit end, and indicates a delay or an advance of the clock of the receive end relative to the clock of the transmit end in a transmission process. In addition, even if the frequencies of the two clocks are the same, there is a slight time difference between the transmit end and the receive end due to factors such as different transmission path lengths and signal propagation delays. This time difference is the timing offset.

In multi-TRP communication in terrestrial cellular systems, high-precision calibration typically needs to be performed on transmission frequencies, timing, initial phases, and the like of a plurality of TRPs, to coherently superpose signals arriving at a same terminal device from the plurality of TRPs. In addition, TRPs in the terrestrial cellular system are typically stationary. A frequency difference between the terminal device and different TRPs is caused by an intrinsic signal difference, resulting in a small frequency offset difference with a typical value ranging from 0.1 ppm to 1 ppm. In addition, frequency offset calibration may be performed in a relatively simple manner. For example, the TPR shifts a spectrum of a transmit signal to implement frequency offset calibration. In addition, when a temperature remains stable, a frequency drift of the TRP can be sufficiently small to be neglected. Therefore, once the frequency offset of the signal is calibrated, the calibration state may be maintained over a relatively long period of time. In conclusion, in multi-TRP communication scenarios of the terrestrial cellular systems, a frequency offset difference is small, and there is no requirement for phase-level calibration.

Different from that in the multi-TRP communication in the terrestrial cellular systems, there is a large frequency offset difference between the terminal device and different satellites in multi-satellite communication. In this case, if frequency offset calibration is performed by using a spectrum shift method, even if phase, frequency, and timing alignment are implemented at specific time, signals arriving at the terminal device from different satellites still immediately generate a timing drift rate difference due to the large frequency offset difference. In addition, the timing drift rate difference between the terminal device and the different satellites causes a new phase difference, resulting in a calibration failure. For example, when only a frequency offset difference and an initial phase difference between the satellites are compensated, a phase difference between the satellites rapidly increases with time, resulting in a calibration failure. In conclusion, a larger frequency offset difference in the multi-satellite communication indicates a faster phase difference increase. Therefore, phase-level calibration needs to be performed.

Maintenance time of phase difference calibration between the terminal device and the different satellites is greatly affected by the timing drift rate difference, and the timing drift rate difference sensed by the terminal device may be determined based on a frequency offset of a satellite device and a channel frequency offset. However, an actual value of the frequency offset of the satellite device cannot be accurately obtained, and precision of the channel frequency offset is limited by an ephemeris and precision of a GNSS of the terminal device. As a result, precision of the timing drift rate difference sensed by the terminal device is poor, and phase difference calibration precision is also poor.

In embodiments, it is considered that high-precision calibration relies on measurement and feedback of the terminal device, to improve phase difference calibration precision and avoid phase difference calibration maintenance difficulty caused by the timing drift rate difference, so that the network device can perform high-precision phase difference calibration based on the feedback of the terminal device.

During specific implementation, in the multi-satellite communication, the terminal device may measure a measurement signal of each of one or more network devices, to obtain a timing drift rate and/or a timing offset corresponding to each measurement signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at a terminal device, to improve communication quality through coherent superposition.

It should be noted that the measurement signal mentioned in embodiments may be a signal for channel estimation and signal recovery, or a signal for providing time and frequency synchronization, channel state information (channel state information, CSI), and the like.

For example, the measurement signal may include at least one of a pilot signal, a downlink reference signal, a synchronization signal block (SSB), or the like. The downlink reference signal includes at least one of a CSI-RS, a PT-RS, or the like.

The pilot signal is a known and fixed signal, and is inserted into a data signal in advance at the transmit end. The pilot signal may be used by the receive end to perform channel estimation and signal recovery. For channel estimation, the pilot signal is used to transmit a known signal sample. The receive end may estimate a channel fading and distortion status by measuring a difference between a received pilot signal and the known pilot signal. For signal recovery, the receive end uses a channel estimation result to eliminate distortion caused by a channel, thereby recovering an original data signal.

The downlink reference signal is a specific signal sent by the network device to the terminal device. A main function of the downlink reference signal is to provide time and frequency synchronization, CSI, and the like. For time and frequency synchronization, the downlink reference signal may help implement time and frequency synchronization between the terminal device and a base station, to ensure that a received signal is decoded and processed at a correct moment and frequency. For CSI, the terminal device obtains information about a channel status by using the downlink reference signal, including channel quality, a fading status, and the like. The information may be used by the terminal device for adaptive modulation and coding, to improve communication quality and system performance.

To implement the foregoing solution content, embodiments are mainly described in detail from three aspects: a "configuration process", a "measurement process", and a "feedback process" by using the pilot signal as an example. A person skilled in the art may also replace the "pilot signal" with another signal like the "downlink reference signal" to implement a same technical solution. Details are not described herein again.

### [Configuration process]

To enable the terminal device to measure a pilot signal of each of one or more network devices, before measurement, a corresponding network configuration usually needs to be performed on a measurement process, so that the terminal device performs corresponding measurement behavior based on the network configuration.

It should be noted that the foregoing configuration process may be completed in a procedure like cell search, cell camping, cell synchronization, random access, cell handover, cell reselection, or resource scheduling. In addition, a network may implement the network configuration by using higher layer signaling (for example, RRC signaling or MAC signaling), system information (SI), DCI, or the like.

For example, one or some of the one or more network devices send higher layer signaling to the terminal device, to implement a network configuration process by using the higher layer signaling. In addition, whether one or some of the one or more network devices send the higher layer signaling to the terminal device may be determined through interaction and negotiation between the terminal device and the one or more network devices. The one or some of the one or more network devices may be one or more network devices that have best quality of communication with the terminal device, or may be any one or more of the one or more network devices. This may be specified in a protocol, and is not specifically limited.

In embodiments, an example in which one or some of the one or more network devices send "configuration information" to the terminal device is used for description. The configuration information is used to configure a timing drift rate and/or timing offset measurement process, and the configuration information is carried in higher layer signaling.

Specifically, configuration content configured by the network device for the terminal device in a configuration process includes at least one of the following: a configuration of a format of a pilot signal, a configuration of a measurement window, a configuration of a feedback manner of the timing drift rate, or a configuration of a feedback manner of the timing offset.

In other words, the configuration information includes at least one of the following: a configuration of a format of a pilot signal, a configuration of a measurement window, a configuration of a feedback manner of the timing drift rate, or a configuration of a feedback manner of the timing offset.

It should be noted that when the network device configures different configuration content for the terminal device for measurement, the different configuration content may be carried in a same piece of higher layer signaling, may be carried in a plurality of pieces of higher layer signaling, may be completed in a same procedure (for example, a resource scheduling procedure), may be completed in different procedures, may be sequentially obtained in a time sequence, or may be simultaneously obtained in a time sequence. This is not specifically limited. The following describes the foregoing configuration content in detail.

### [Configuration of a format of a pilot signal]

The configuration of the format of the pilot signal may be understood as that the network device configures, for the terminal device, a format of the pilot signal of each of the one or more network devices in the measurement process. In this way, the terminal device may learn of, based on the format of the pilot signal, the pilot signal that needs to be measured.

Embodiments are described below by using an example in which the configuration information includes "first information" and the first information is used to configure the format of the pilot signal of each of the one or more network devices. In this way, one or some of the one or more network devices send the first information to the terminal device, to configure the format of the pilot signal of each of the one or more network devices by using the first information.

Optionally, the format of the pilot signal includes at least one of the following: a sequence of the pilot signal, a time-frequency resource position of the pilot signal, or a port of the pilot signal. Specific descriptions are separately provided below.

The sequence of the pilot signal may be referred to as a pilot sequence, is a sequence including a series of known symbols, and is used for channel estimation and phase calibration. The pilot sequence may be a sequence including a group of determined symbols, or may be a pseudorandom sequence. The pilot sequence may be predefined by the transmit end, and is periodically inserted into a data stream in a data transmission process, so that the receive end can implement channel estimation and calibration through a demodulation process. The pilot sequence may have good autocorrelation and cross-correlation, so that the receive end can perform correct identification and demodulation. In addition, the pilot sequence needs to have a sufficient length, so that accurate channel estimation and phase calibration can be implemented in complex environments such as channel multipath and interference.

The time-frequency resource position of the pilot signal may be a distribution status of the pilot signal in time domain and frequency domain. The pilot signal is usually arranged in a specific slot or subcarrier, so that the receive end can perform channel estimation and synchronization calibration.

For example, in an OFDM system, a pilot signal is usually arranged in a preamble part of each OFDM symbol, so that the receive end can accurately estimate a channel response. Specifically, the preamble part of each OFDM symbol includes a pilot sequence used for channel estimation and synchronization calibration, and a length and a position of the pilot sequence depend on a specific OFDM standard and application scenario.

For another example, in an LTE system, a pilot signal is arranged on a specific symbol in each slot, and is allocated to different antenna ports, so that the receive end can obtain accurate channel state information (channel state information, CSI). Specifically, two pilot distribution manners in which a spacing between adjacent pilot symbols is 3 or 4 are used in the LTE system. A first pilot symbol is allocated to a first antenna port, and a second pilot symbol is allocated to a second antenna port.

In addition, time-frequency resource positions of pilot signals may alternatively be different. For example, in a CDMA system, a pilot signal is usually located at a start position of each chip, so that the receive end can perform synchronization calibration and symbol demodulation. In a multiple-input multiple-output (MIMO) system, pilot signals are usually allocated to different antenna ports, so that the receive end can obtain accurate channel matrix information.

In the MIMO system, the pilot signals are usually allocated to different antenna ports, so that the receive end can accurately estimate a channel matrix. For example, in the LTE system, pilot signals are allocated to two different antenna ports, so that the receive end can obtain accurate channel state information.

The port of the pilot signal may be an antenna port to which the pilot signal is allocated in the MIMO system. In the MIMO system, a plurality of antennas are used to send and receive signals, to improve a capacity and reliability of the system. The pilot signal is used for channel estimation and phase calibration, so that the receive end can perform optimized signal processing.

In the MIMO system, the pilot signals may be allocated to a same antenna port or different antenna ports, and different transmission manners are used to implement spatial diversity or spatial multiplexing, so that the receive end can accurately estimate the channel matrix.

For example, in a MIMO spatial diversity system, pilot signals are allocated to different antenna ports and are transmitted independently. In this way, the receive end performs joint estimation on pilot signals received on different antennas, to implement channel estimation and optimized signal processing.

For another example, in a MIMO spatial multiplexing system, pilot signals are allocated to a same antenna port and are transmitted through sharing. In this way, the receive end processes pilot signals received on a same antenna, to implement channel estimation and optimized signal processing.

For another example, in the LTE system, the pilot signals are allocated to two different antenna ports, so that the receive end can obtain accurate CSI.

### [Configuration of a measurement window]

The configuration of the measurement window may be understood as that the network device configures, for the terminal device, a measurement window required in the measurement process. In this way, the terminal device only needs to perform measurement in the measurement window, to avoid continuous measurement.

Embodiments are described by using an example in which the configuration information includes "second information" and the second information is used to configure the measurement window. In this way, one or some of the one or more network devices send the second information to the terminal device, to configure the measurement window by using the second information.

Before measurement, the one or more network devices may agree on the measurement window with the terminal device. The measurement window may be a time period, and the terminal device measures the pilot signal of each of the one or more network devices in the time period, to avoid continuous measurement.

For example, as shown in FIG. 7, the one or more network devices include a network device 721, a network device 722, and a network device 723. The network device 721 sends configuration information to a terminal device 710, where the configuration information is used to configure a timing drift rate and/or timing offset measurement process, and the configuration information includes second information. In this way, the terminal device 710 measures a pilot signal of the network device 721, a pilot signal of the network device 722, and a pilot signal of the network device 723 in a measurement window configured by using the second information, to obtain a timing drift rate and/or a timing offset corresponding to each pilot signal.

An objective of introducing the measurement window in embodiments is that the terminal device can obtain a stable timing drift rate and/or timing offset through measurement in the measurement window, to avoid continuous measurement. To ensure that the terminal device can obtain the stable timing drift rate and/or timing offset through measurement in the measurement window, in embodiments, the following may be defined:

In the measurement window, a pilot signal of each of a plurality of network devices satisfies at least one of the following: a carrier phase of the pilot signal keeps continuous, downlink timing of the pilot signal keeps continuous, a frequency of the pilot signal keeps continuous, or a sampling rate of the pilot signal keeps continuous. In addition, when the terminal device measures a timing drift rate in the measurement window, at least one of the following is satisfied: downlink timing keeps continuous, a frequency offset compensation amount remains unchanged, or a sampling rate remains unchanged.

That the downlink timing of the pilot signal keeps continuous may be understood as that the pilot signal does not jump in the downlink timing, in other words, the downlink timing of the pilot signal does not suddenly change greatly in time. This is to ensure that the terminal device can stably receive and process the pilot signal, to perform accurate channel estimation and demodulation operations.

That the frequency of the pilot signal keeps continuous may be understood as that the pilot signal does not jump in frequency, in other words, the frequency of the pilot signal does not suddenly change greatly. This is to ensure that the terminal device can stably receive and process the pilot signal, to perform accurate channel estimation and demodulation operations.

That the sampling rate of the pilot signal keeps continuous may be understood as that the pilot signal does not jump in the sampling rate, in other words, the sampling rate of the pilot signal does not suddenly change greatly. This is to ensure that the terminal device can stably receive and process the pilot signal, to perform accurate channel estimation and demodulation operations.

That the downlink timing keeps continuous may be understood as that the terminal device does not adjust the downlink timing when measuring the timing drift rate, in other words, the downlink timing does not suddenly change greatly in time. This is to ensure that downlink timing, a frequency, a carrier phase, or the like of the measured pilot signal keeps continuous, so as to accurately measure the timing drift rate.

That the frequency offset compensation amount remains unchanged may be understood as that the terminal device does not adjust the frequency offset compensation amount when measuring the timing drift rate. This is to ensure that downlink timing, a frequency, a carrier phase, or the like of the measured pilot signal keeps continuous, so as to accurately measure the timing drift rate.

That the sampling rate remains unchanged may be understood as that the terminal device does not adjust the sampling rate when measuring the timing drift rate. This is to ensure that downlink timing, a frequency, a carrier phase, or the like of the measured pilot signal keeps continuous, so as to accurately measure the timing drift rate.

Specifically, the configuration of the measurement window (namely, the second information) may include one of the following: an association between a format of a pilot signal of each of one or more network devices and the measurement window, a start position of the measurement window, a length of the measurement window, an end position of the measurement window, a periodicity of the measurement window, and a timing reference point associated with the measurement window. Specific descriptions are separately provided below.

To ensure that the terminal device can learn of that some pilot signals need to be measured in the measurement window, in a process in which the network device configures the measurement window for the terminal device, the network device configures an association between the format of the pilot signal of each of one or more network devices and the measurement window, and configures the association for the terminal device by using higher layer signaling. In this way, the terminal device may measure, in the measurement window, the pilot signal associated with the measurement window.

In addition, the format of the pilot signal associated with the configured measurement window includes a format of a reference pilot, for example, a port of the reference pilot. In other words, the network device notifies the terminal device that a pilot signal in the pilot signal associated with the measurement window is a reference pilot signal. The reference pilot signal may be used to determine a reference value of the timing drift rate and/or the timing offset, and is specifically described in the following "feedback process", to reduce a feedback amount of a timing drift rate and/or the timing offset, thereby reducing signaling overheads or the like during feedback.

The start position of the measurement window may be start time of the measurement window. The start position of the measurement window describes when the measurement window needs to start so that the pilot signal can be correctly captured and measured, and channel state estimation and adjustment can be performed. The start position of the measurement window may be configured by the network device, and is usually selected based on factors such as different communication scenarios and user requirements.

For example, the network device may directly configure a first symbol in a slot in a radio frame as the start position of the measurement window.

For another example, the network device may configure an offset (offset), and the offset indicates a time offset between a receiving position of the configuration information (or the second information) and the start position of the measurement window. In this way, because the terminal device can learn of the receiving position of the configuration information, the terminal device can determine the start position of the measurement window based on the receiving position of the configuration information and the offset.

The length of the measurement window may be duration of the measurement window, and is used to describe when the measurement window ends. The length of the measurement window may be selected based on a specific application scenario and system requirement.

For example, in a case of high-speed movement, a shorter measurement window may be selected, to perform channel estimation and measurement more in a more timely manner.

The end position of the measurement window may be end time of the measurement window. The end position of the measurement window may be usually calculated based on the start position and the length of the measurement window, or may be directly configured by the network device. When the end position of the measurement window is reached, the terminal device stops a measurement operation, and feeds back a measurement result to the network device.

For example, the network device may directly configure a last symbol in a slot in a radio frame as the end position of the measurement window.

The periodicity of the measurement window may be a time period in which measurement needs to be performed once. For example, measurement is performed every second, or measurement is performed every 5 milliseconds. In addition, the periodicity of the measurement window may be selected based on a specific application scenario and system requirement, to better estimate and measure a channel state.

The timing reference point may be understood as a time-domain position associated with the measurement window. The time-domain position of the timing reference point may be in the measurement window, or may be outside the measurement window.

In addition, the timing reference point may be used to calculate a timing offset of the pilot signal at the timing reference point, and is specifically described in the following "measurement process", to resolve a problem of ambiguity in feedback and interpretation caused by a time-varying timing drift.

Optionally, the time-domain position of the timing reference point may be represented by a symbol. In other words, the time-domain position of the timing reference point is at a symbol level. For example, the network device configures a symbol in a slot in a radio frame as the timing reference point.

In this way, in comparison with a slot level, the time-domain position of the timing reference point at a symbol level has a smaller granularity, to facilitate calculation of a timing offset of a pilot signal at the timing reference point.

### [Configuration of a feedback manner of a timing drift rate]

The configuration of the feedback manner of the timing drift rate may be understood as that the network device configures, for the terminal device, a feedback manner of a timing drift rate corresponding to the pilot signal of each of the one or more network devices in the feedback process. In this way, the terminal device may learn of, based on the feedback manner of the timing drift rate, how to feed back a timing drift rate corresponding to each pilot signal.

Embodiments are described by using an example in which the configuration information includes "third information" and the third information is used to configure a feedback manner of the timing drift rate corresponding to each pilot signal. In this way, one or some of the one or more network devices send the third information to the terminal device, to configure the feedback manner of the timing drift rate corresponding to the pilot signal of each of the one or more network devices by using the third information.

Specifically, the feedback manner of the timing drift rate may include an absolute feedback manner and a relative feedback manner.

The absolute feedback manner may mean that the terminal device directly sends a measurement value of the timing drift rate to the network device, so that the network device performs corresponding clock compensation, adjustment, and the like based on the measurement value. In this manner, an accurate timing drift rate may be provided.

The relative feedback manner may mean that the terminal device sends a difference between the measurement value of the timing drift rate and a reference value to the network device. In this manner, signaling overheads can be reduced because only one difference instead of a complete measurement value needs to be transmitted. The network device may calculate an actual timing drift rate based on the reference value and the difference, and make corresponding adjustment.

It should be noted that whether the absolute feedback manner or the relative feedback manner is selected depends on a specific application requirement and system design. The absolute feedback manner provides more accurate timing drift rate information, and is applicable to a scenario in which a requirement for the timing drift rate is high. The relative feedback manner may reduce signaling overheads, and is applicable to a scenario in which a precision requirement for the timing drift rate is low and transmission overheads are considered. In addition, regardless of which feedback manner is used, the timing drift rate is measured and fed back so that the network device can perform compensation and adjustment in time, to maintain clock synchronization performance of a system.

### [Configuration of a feedback manner of a timing offset]

The configuration of the feedback manner of the timing offset may be understood as that the network device configures, for the terminal device, a feedback manner of a timing offset corresponding to the pilot signal of each of the one or more network devices in the feedback process. In this way, the terminal device may learn of, based on the feedback manner of the timing offset, how to feed back a timing offset corresponding to each pilot signal.

Embodiments are described by using an example in which the configuration information includes "fourth information" and the fourth information is used to configure a feedback manner of the timing offset corresponding to each pilot signal. In this way, one or some of the one or more network devices send the fourth information to the terminal device, to configure the feedback manner of the timing offset corresponding to the pilot signal of each of the one or more network devices by using the fourth information.

Specifically, the feedback manner of the timing offset may include absolute feedback and relative feedback.

The absolute feedback may mean that the terminal device directly sends a measurement value of the timing offset to the network device, so that the network device performs corresponding clock compensation, adjustment, and the like based on the measurement value. In this manner, an accurate timing offset may be provided.

The relative feedback may mean that the terminal device sends a difference between the measurement value of the timing offset and a reference value to the network device. In this manner, signaling overheads can be reduced because only one difference instead of a complete measurement value needs to be transmitted. The network device may calculate an actual timing offset based on the reference value and the difference, and make corresponding adjustment.

It should be noted that whether the absolute feedback or the relative feedback is selected depends on a specific application requirement and system design. The absolute feedback provides more accurate timing offset information, and is applicable to a scenario in which a requirement for the timing offset is high. The relative feedback may reduce signaling overheads, and is applicable to a scenario in which a precision requirement for the timing offset is low and transmission overheads are considered. In addition, regardless of which feedback manner is used, the timing offset is measured and fed back so that the network device can perform compensation and adjustment in time, to maintain clock synchronization performance of a system.

### [Measurement process]

After performing a corresponding network configuration on the measurement process, the terminal device performs corresponding measurement behavior based on the network configuration. In the measurement process, the terminal device may measure the pilot signal of each of the one or more network devices, to obtain the timing drift rate and/or the timing offset corresponding to each pilot signal.

The following describes how to measure the timing offset and the timing drift rate that correspond to each pilot signal.

Specific steps of obtaining the timing offset and the timing drift rate by measuring the pilot signal are as follows:
Step 1: Send a pilot signal.
   Each network device inserts a known pilot signal in a downlink. These pilot signals are fixed in time and frequency. Pilot signals are usually sent at a specific interval.
Step 2: Perform signal sampling.
   After receiving a signal sample including the pilot signal, the terminal device performs sampling on the pilot signal. A sampling rate needs to match a bandwidth of the pilot signal.
Step 3: Perform channel estimation.
   The terminal device matches the sampled pilot signal with an expected pilot signal, and obtains, through comparison, a difference between the sampled pilot signal and the expected pilot signal. This process is referred to as channel estimation. By comparing an actual received value of the pilot signal with an expected value, information about channel fading and distortion may be obtained.
Step 4: Align pilot symbols.
   The terminal device aligns the pilot symbols by searching for a maximum correlation peak value between the received pilot signal and the expected pilot signal. A pilot sequence is known. Therefore, the terminal device may find a timing position of a pilot symbol by searching for the maximum correlation peak value.
Step 5: Calculate the timing offset.

The timing offset may be obtained by calculating a delay difference between the received pilot signal and the expected pilot signal. The timing offset indicates an offset of the received pilot signal relative to an expected position in time.

It should be noted that the "timing offset corresponding to each pilot signal" mentioned in embodiments may include at least one of the following: a timing offset corresponding to at least one pilot symbol of each pilot signal, an accumulation of timing offsets corresponding to a plurality of pilot symbols of each pilot signal, or a timing offset corresponding to each pilot signal on a symbol of the timing reference point.

For example, a timing offset corresponding to a pilot symbol is represented as follows: $TOA \left(i\right) = R \left(i\right) ⋅ exp \left(-j2{πf}_{d}{T}_{s}i\right) .$

Herein, *i* represents an index of a received pilot symbol, *TOA*(*i*) represents a timing offset corresponding to an *i*^{th} received pilot symbol, *R*(*i*) represents the received pilot symbol, *f_{d}* represents a frequency offset in a channel, and *T_{S}* represents a sampling periodicity.

An accumulation of timing offsets corresponding to a plurality of pilot symbols of the pilot signal is represented as follows: $TOA = arg max \left({\sum }_{i = 0}^{N - 1} TOA \left(i\right)\right) .$

Herein, *N* represents a quantity of symbols, and *TOA* represents an accumulation of timing offsets corresponding to *N* pilot symbols.

For the timing offset corresponding to the pilot signal on the symbol of the timing reference point, because the terminal device may obtain, through measurement, timing offsets corresponding to at least two pilot symbols of the pilot signal, the terminal device may perform linear fitting on the timing offsets corresponding to the at least two pilot symbols, to obtain a linear fitting straight line. In this case, a timing offset corresponding to the symbol of the timing reference point is obtained through calculation on the linear fitting straight line, to obtain the timing offset corresponding to the pilot signal on the symbol of the timing reference point.

In other words, the timing offset corresponding to each pilot signal on the symbol of the timing reference point is determined based on a moment at which the symbol of the timing reference point is located, timing offsets respectively corresponding to at least two pilot symbols of each pilot signal, or moments at which the at least two pilot symbols are located. This is easy to implement.

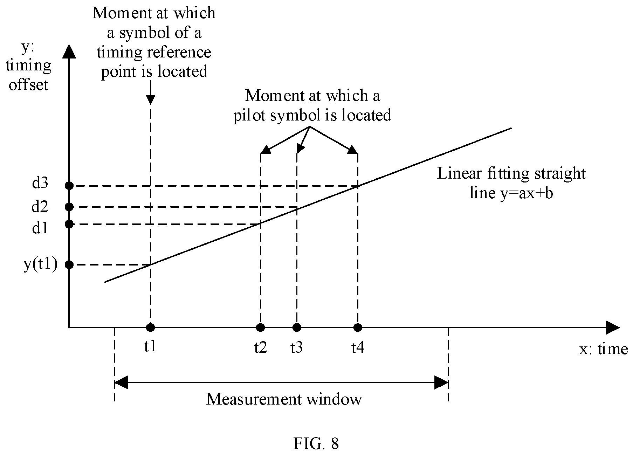

For example, in FIG. 8, a moment at which the symbol of the timing reference point is located is a moment t1, and moments at which three pilot symbols of the pilot signal are located are a moment t2, a moment t3, and a moment t4. In addition, measurement values that are of timing offsets corresponding to the three pilot symbols and that are obtained by the terminal device through measurement are respectively d1, d2, and d3. In this way, linear fitting is performed by using the timing offsets respectively corresponding to the three pilot symbols, to obtain a linear fitting straight line y=ax+b corresponding to the pilot signal. In this case, a measurement value of a timing offset corresponding to the symbol of the timing reference point is calculated as y(t1) on the linear fitting straight line, so that a measurement value of the timing offset corresponding to the pilot signal on the symbol of the timing reference point is y(t1).

### Step 6: Calculate the timing drift rate.

For time division multiplexing (TDMA) signals or the like, signals of different terminal devices need to be separated in time domain. Therefore, the network device sequentially sends predefined pilot symbols within a specific time interval. The terminal device may estimate, by observing a change in a delay difference in transmission of these pilot symbols on an actual channel, the timing drift rate corresponding to the pilot signal.

Generally, the terminal device calculates a delay difference (namely, a difference between timing offsets corresponding to two consecutive pilot symbols) between two consecutive pilot symbols of the pilot signal, and uses the delay difference as a reference value. Then, when continuously observing that the delay difference between the two consecutive pilot symbols changes, the terminal device may calculate a difference between delay differences to obtain a delay difference change rate. Because the delay difference change rate is related to a frequency offset rate of the pilot signal, the timing drift rate corresponding to the pilot signal, namely, a slope of the linear fitting straight line, is determined by analyzing the delay difference change rate.

In other words, the timing drift rate corresponding to each pilot signal is determined based on timing offsets corresponding to two consecutive pilot symbols of each pilot signal and a time interval between the two consecutive pilot symbols. In this way, the terminal device may calculate a ratio of a difference between the timing offsets corresponding to the two consecutive pilot symbols to the time interval between the two consecutive pilot symbols, to obtain the timing drift rate corresponding to the pilot signal. This is easy to implement.

For example, in FIG. 8, delay differences of two consecutive pilot symbols continuously observed by the terminal device are respectively d1 and d2, a time interval between the two consecutive pilot symbols is t3-t2, and a delay difference change rate is calculated as a=(d2-d1)/(t3-t2). In this case, the timing drift rate corresponding to the pilot signal may be a=(d2-d1)/(t3-t2).

### [Timing drift rate feedback process]

### a. Description

After measuring the timing drift rate corresponding to the pilot signal of each of the one or more network devices, the terminal device feeds back the timing drift rates.

In the timing drift rate feedback process, the terminal device may perform feedback in the feedback manner configured in the network in the foregoing "configuration of the feedback manner of the timing drift rate", may perform feedback in a manner independently determined by the terminal device instead of the feedback manner configured in the network, may perform feedback in a default feedback manner, may perform feedback in a latest configured feedback manner, or may perform feedback in a previous feedback manner/an originally configured feedback manner. This is not specifically limited.

Embodiments are mainly described by using an example in which the terminal device performs feedback in the feedback manner configured in the network, and the terminal device sends first feedback information to feed back the timing drift rates.

Based on the content in the foregoing "configuration of the feedback manner of the timing drift rate", one or some of the one or more network devices send the third information to the terminal device, to configure the feedback manner of the timing drift rate in the network by using the third information. The feedback manner configured in the network includes the absolute feedback manner and the relative feedback manner.

### b. Indication content of the feedback information

In the timing drift rate feedback process, the terminal device may send the first feedback information to each network device. The first feedback information indicates a timing drift rate that corresponds to a pilot signal of one network device and that needs to be fed back, so that the timing drift rate corresponding to the pilot signal of each network device is fed back to the network device.

In this way, because the terminal device separately feeds back the timing drift rate corresponding to each pilot signal, each network device may directly obtain the timing drift rate corresponding to the pilot signal of the network device, so that timing drift rate feedback efficiency is high.

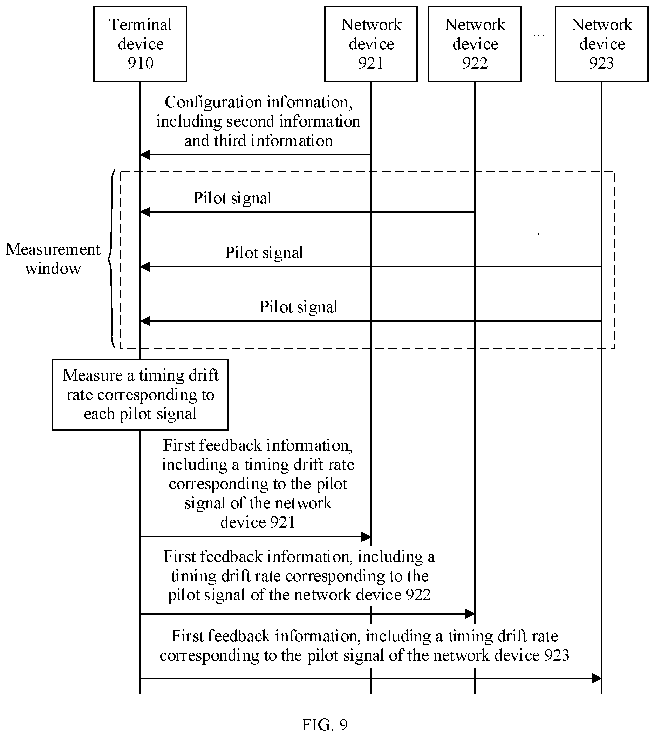

For example, in FIG. 9, the one or more network devices include a network device 921, a network device 922, and a network device 923. The network device 921 sends configuration information to a terminal device 910, where the configuration information is used to configure a timing drift rate measurement process, and the configuration information includes first information, second information, and third information.

Then, the terminal device 910 measures a pilot signal of the network device 921, a pilot signal of the network device 922, and a pilot signal of the network device 923 in a measurement window configured by using the second information, to obtain a timing drift rate corresponding to each pilot signal.

Finally, the terminal device 910 sends first feedback information to the network device 921, where the first feedback information includes a timing drift rate corresponding to the pilot signal of the network device 921; the terminal device 910 sends the first feedback information to the network device 922, where the first feedback information includes a timing drift rate corresponding to the pilot signal of the network device 922; and the terminal device 910 sends the first feedback information to the network device 923, where the first feedback information includes a timing drift rate corresponding to the pilot signal of the network device 923.

In the timing drift rate feedback process, the terminal device may feed back, to one of the one or more network devices, timing drift rates corresponding to pilot signals of all the network devices, and then the network device forwards the timing drift rates corresponding to respective pilot signals of other network devices to the other network devices. In addition, a specific network device that is in the one or more network devices and to which the terminal device performs feedback may be determined through interaction and negotiation between the terminal device and the one or more network devices, may be one network device that has best quality of communication with the terminal device, may be any one of the one or more network devices, or the like. This may be specified in a protocol, and is not specifically limited.

In this way, because the terminal device needs to feed back, to only one network device, the timing drift rates corresponding to the pilot signals of all the network devices, feedback signaling overheads are low.

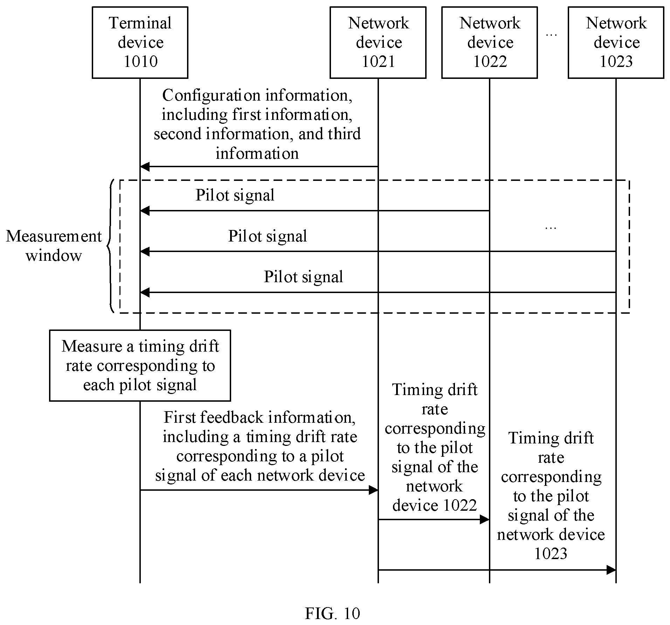

For example, in FIG. 10, the one or more network devices include a network device 1021, a network device 1022, and a network device 1023. The network device 1021 sends configuration information to a terminal device 1010, where the configuration information is used to configure a timing drift rate measurement process, and the configuration information includes first information, second information, and third information.

Then, the terminal device 1010 measures a pilot signal of the network device 1021, a pilot signal of the network device 1022, and a pilot signal of the network device 1023 in a measurement window configured by using the second information, to obtain a timing drift rate corresponding to each pilot signal.

Finally, the terminal device 1010 sends first feedback information to the network device 1021, where the first feedback information includes the timing drift rate corresponding to each pilot signal. After the network device 1021 receives the first feedback information, the network device 1021 sends, to the network device 1022, a timing drift rate corresponding to the pilot signal of the network device 1022, and sends, to the network device 1023, a timing drift rate corresponding to the pilot signal of the network device 1023.

### c. Feedback manner

Based on the content in the foregoing "configuration of the feedback manner of the timing drift rate", the third information indicates the absolute feedback manner or the relative feedback manner.

If the third information indicates the absolute feedback manner, the terminal device directly sends a measurement value of the timing drift rate to the network device. In this case, the first feedback information includes a timing drift rate that corresponds to a pilot signal of one network device and that needs to be fed back, or the timing drift rate corresponding to each pilot signal.

In addition, in the absolute feedback manner, the timing drift rate corresponding to each pilot signal may be represented by using a sampling rate proportion relationship. In this way, the terminal device may perform, by using the sampling rate proportion relationship, absolute feedback on the timing drift rate corresponding to each pilot signal. For example, in FIG. 8, the timing drift rate corresponding to the pilot signal is a=(d2-d1)/(t3-t2). In this case, (d2-d1)/(t3-t2) may represent a sampling rate proportion relationship.

If the third information indicates the relative feedback manner, the terminal device sends a difference between the measurement value of the timing drift rate and a reference value to the network device. In this case, the first feedback information includes a difference that is between the timing drift rate corresponding to the pilot signal of one network device and a reference timing drift rate and that needs to be fed back, or a difference between the timing drift rate corresponding to each pilot signal and the reference timing drift rate.

Optionally, the reference timing drift rate is a reference value configured or preconfigured in the network. In other words, the network device configures a reference value for the terminal device to implement relative feedback.

Optionally, the reference timing drift rate is a timing drift rate corresponding to a reference pilot signal in the pilot signal of each of the one or more network devices. In other words, the network device configures a pilot signal in these pilot signals as a reference pilot signal for the terminal device, so that the terminal device uses a measurement value of a timing drift rate corresponding to the reference pilot signal as the reference value to implement relative feedback.

### [Timing offset feedback process]

### a. Description

After measuring the timing offset corresponding to the pilot signal of each of the one or more network devices, the terminal device feeds back the timing offsets based on a network configuration.

In the timing offset feedback process, the terminal device may perform feedback in the feedback manner configured in the network in the foregoing "configuration of the feedback manner of the timing offset", may perform feedback in a manner independently determined by the terminal device instead of the feedback manner configured in the network, may perform feedback in a default feedback manner, may perform feedback in a latest configured feedback manner, or may perform feedback in a previous feedback manner/an originally configured feedback manner. This is not specifically limited.

Embodiments are mainly described by using an example in which the terminal device performs feedback in the feedback manner configured in the network, and the terminal device sends second feedback information to feed back the timing offsets.

Based on the content in the foregoing "configuration of the feedback manner of the timing offset", one or some of the one or more network devices send the fourth information to the terminal device, to configure the feedback manner of the timing offset in the network by using the fourth information. The feedback manner configured in the network includes the absolute feedback manner and the relative feedback manner.

### b. Indication content of the feedback information

In the timing offset feedback process, the terminal device may send the second feedback information to each network device. The second feedback information indicates a timing offset that corresponds to a pilot signal of one network device and that needs to be fed back, so that the timing offset corresponding to the pilot signal of each network device is fed back to the network device.

In this way, because the terminal device separately feeds back the timing offset corresponding to each pilot signal, each network device may directly obtain the timing offset corresponding to the pilot signal of the network device, so that timing offset feedback efficiency is high.

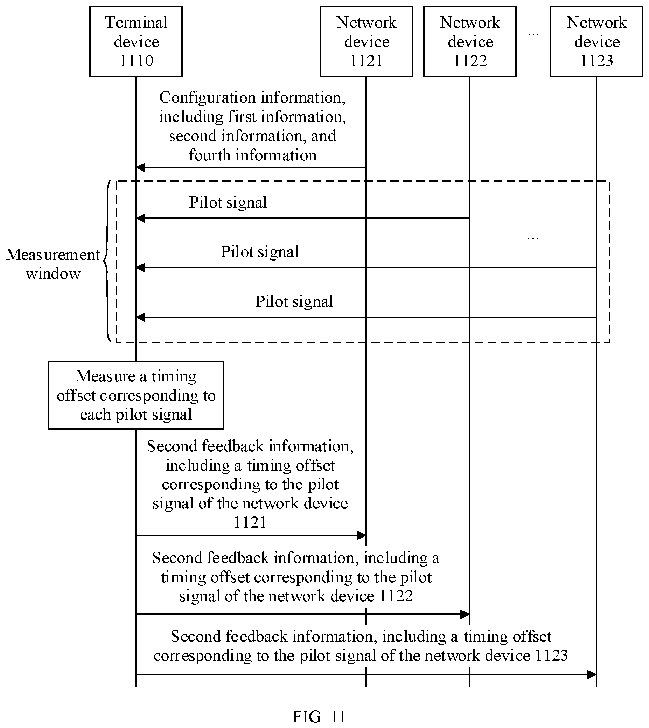

For example, in FIG. 11, the one or more network devices include a network device 1121, a network device 1122, and a network device 1123. The network device 1121 sends configuration information to a terminal device 1110, where the configuration information is used to configure a timing offset measurement process, and the configuration information includes first information, second information, and fourth information.

Then, the terminal device 1110 measures a pilot signal of the network device 1121, a pilot signal of the network device 1122, and a pilot signal of the network device 1123 in a measurement window configured by using the second information, to obtain a timing offset corresponding to each pilot signal.

Finally, the terminal device 1110 sends second feedback information to the network device 1121, where the second feedback information includes a timing offset corresponding to the pilot signal of the network device 1121; the terminal device 1110 sends the second feedback information to the network device 1122, where the second feedback information includes a timing offset corresponding to the pilot signal of the network device 1122; and the terminal device 1110 sends the second feedback information to the network device 1123, where the second feedback information includes a timing offset corresponding to the pilot signal of the network device 1123.

In the timing offset feedback process, the terminal device may feed back, to one of the one or more network devices, timing offsets corresponding to pilot signals of all the network devices, and then the network device forwards the timing offsets corresponding to respective pilot signals of other network devices to the other network devices. In addition, a specific network device that is in the one or more network devices and to which the terminal device performs feedback may be determined through interaction and negotiation between the terminal device and the one or more network devices, may be one network device that has best quality of communication with the terminal device, may be any one of the one or more network devices, or the like. This may be specified in a protocol, and is not specifically limited.

In this way, because the terminal device needs to feed back, to only one network device, the timing offsets corresponding to the pilot signals of all the network devices, feedback signaling overheads are low.

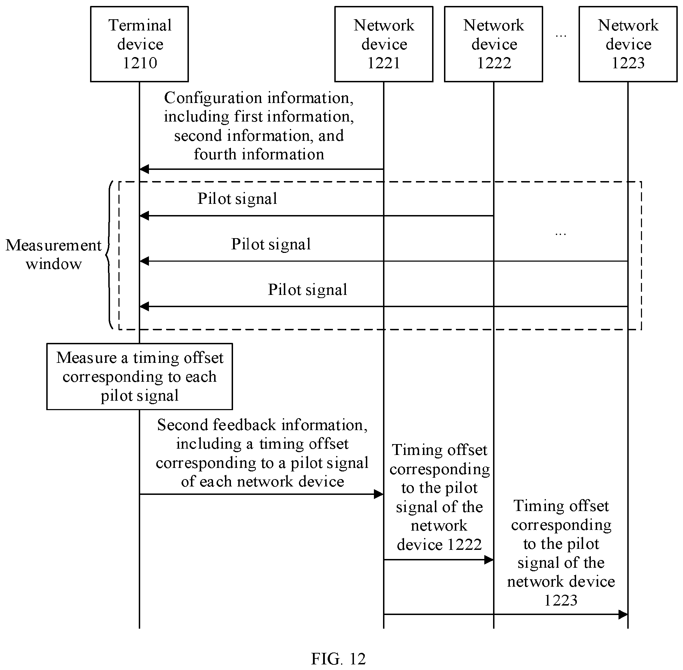

For example, in FIG. 12, the one or more network devices include a network device 1221, a network device 1222, and a network device 1223. The network device 1221 sends configuration information to a terminal device 1210, where the configuration information is used to configure a timing offset measurement process, and the configuration information includes first information, second information, and fourth information.

Then, the terminal device 1210 measures a pilot signal of the network device 1221, a pilot signal of the network device 1222, and a pilot signal of the network device 1223 in a measurement window configured by using the second information, to obtain a timing offset corresponding to each pilot signal.

Finally, the terminal device 1210 sends second feedback information to the network device 1221, where the second feedback information includes the timing offset corresponding to each pilot signal. After the network device 1221 receives the second feedback information, the network device 1221 sends, to the network device 1222, a timing offset corresponding to the pilot signal of the network device 1222, and sends, to the network device 1223, a timing offset corresponding to the pilot signal of the network device 1223.

### c. Feedback manner

Based on the content in the foregoing "configuration of the feedback manner of the timing offset", the fourth information indicates the absolute feedback manner or the relative feedback manner.

If the fourth information indicates the absolute feedback manner, the terminal device directly sends a measurement value of the timing offset to the network device. In this case, the second feedback information includes a timing offset that corresponds to the pilot signal of one network device and that needs to be fed back, or the timing offset corresponding to each pilot signal.

If the fourth information indicates the relative feedback manner, the terminal device sends a difference between the measurement value of the timing offset and a reference value to the network device. In this case, the second feedback information includes a difference that is between the timing offset corresponding to the pilot signal of one network device and a reference timing offset and that needs to be fed back, or a difference between the timing offset corresponding to each pilot signal and the reference timing offset.

Optionally, the reference timing offset is a reference value configured or preconfigured in the network. In other words, the network device configures a reference value for the terminal device to implement relative feedback.

Optionally, the reference timing offset is a timing offset corresponding to a reference pilot signal in the pilot signal of each of the one or more network devices. In other words, the network device configures a pilot signal in these pilot signals as a reference pilot signal for the terminal device, so that the terminal device uses a measurement value of a timing offset corresponding to the reference pilot signal as the reference value to implement relative feedback.

### [Communication method]

Based on the foregoing content, the following describes an example of a communication method in embodiments of this application. It should be noted that the terminal device may be a chip, a chip module, a communication module, or the like, and the network device may be a chip, a chip module, a communication module, or the like.

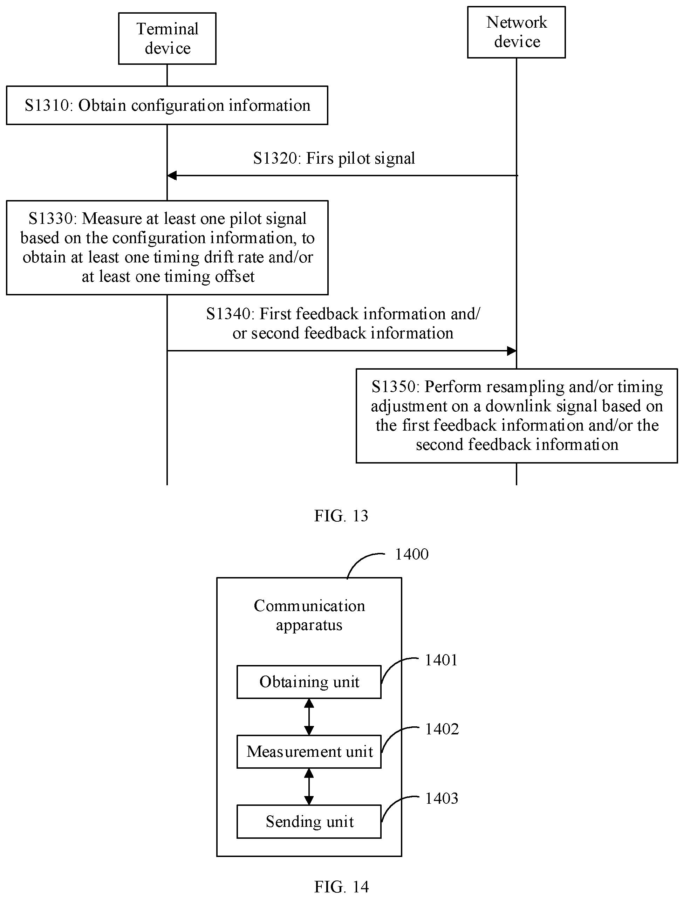

FIG. 13 is a schematic flowchart of a communication method according to an embodiment of this application. The communication method specifically includes the following steps.

S1310: A terminal device obtains configuration information.

It should be noted that the configuration information may be sent by one or some of one or more network devices. This is not specifically limited.

S1320: A network device sends a first pilot signal.

It should be noted that the "network device" herein is one of the one or more network devices, and the first pilot signal is a pilot signal sent by the network device. In addition, each of the one or more network devices sends one pilot signal. In this way, the terminal device receives at least one pilot signal, where each of the at least one pilot signal corresponds to one network device, and the at least one pilot signal includes the first pilot signal.

S1330: The terminal device measures the at least one pilot signal based on the configuration information, to obtain at least one timing drift rate and/or at least one timing offset.

The at least one timing drift rate and/or the at least one timing offset are/is in a one-to-one correspondence with the at least one pilot signal.

S1340: The terminal device sends first feedback information and/or second feedback information to the network device, where the first feedback information indicates the at least one timing drift rate, and the second feedback information indicates the at least one timing offset.

It should be noted that the terminal device may send the first feedback information and/or the second feedback information to each of the one or more network devices, as shown in FIG. 9 and FIG. 11. In this case, in S1340, the first feedback information includes only a timing drift rate corresponding to the first pilot signal, and the second feedback information includes only a timing offset corresponding to the first pilot signal.

Alternatively, the terminal device may send the first feedback information and/or the second feedback information only to the network device that sends the first pilot signal, and then the network device forwards the first feedback information and/or the second feedback information to another network device, as shown in FIG. 10 and FIG. 12. In this case, in S1340, the first feedback information includes a timing drift rate corresponding to each pilot signal, and the second feedback information includes a timing offset corresponding to each pilot signal.

Correspondingly, the network device receives the first feedback information and/or the second feedback information.

S1350: The network device performs resampling and/or timing adjustment on a downlink signal based on the first feedback information and/or the second feedback information.

It should be noted that each of the one or more network devices performs resampling and/or timing adjustment on a downlink signal based on a timing drift rate and/or a timing offset corresponding to a pilot signal of the network device. In this case, in S1350, the network device performs resampling and/or timing adjustment on the downlink signal based on the timing drift rate corresponding to the first pilot signal and/or the timing offset corresponding to the first pilot signal.

In addition, for "configuration information", "measurement of a pilot signal", "first feedback information", "second feedback information", and the like, refer to the foregoing content. Details are not described herein again.

It can be learned that in multi-satellite communication, the terminal device may measure a pilot signal of each of one or more network devices, to obtain a timing drift rate and/or a timing offset corresponding to each pilot signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at the terminal device, to improve communication quality through coherent superposition.

### 3. Example description of functional units of a communication apparatus

### [Description]

The foregoing mainly describes solutions in embodiments of this application from a method perspective. It may be understood that, to implement the foregoing functions, the terminal device includes a corresponding hardware structure and/or software module for performing the functions. A person skilled in the art should easily be aware that, in combination with the examples described in embodiments disclosed in this specification, units and algorithm steps can be implemented by hardware or a combination of hardware and computer software in embodiments. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments.

In embodiments of this application, functional unit division may be performed on the terminal device based on the foregoing method examples. For example, each functional unit may be obtained through division based on a corresponding function, or two or more functions may be integrated into one processing unit. The integrated unit may be implemented in a form of hardware, or may be implemented in a form of a software program module. It should be noted that, in embodiments of this application, unit division is an example, and is merely a logical function division. During actual implementation, another division manner may be used.

When an integrated unit is used, FIG. 14 is a composition block diagram of functional units of a communication apparatus according to an embodiment of this application. The communication apparatus 1400 includes an obtaining unit 1401, a measurement unit 1402, and a sending unit 1403.

Optionally, the obtaining unit 1401 may be a module unit configured to obtain a signal, information, or the like. This is not specifically limited.

Optionally, the measurement unit 1402 may be a module unit configured to measure a signal or the like. This is not specifically limited.

Optionally, the sending unit 1403 may be a module unit configured to send a signal, information, or the like. This is not specifically limited.

Optionally, the communication apparatus 1400 may further include a storage unit that is configured to store computer program code or instructions executed by the communication apparatus 1400. The storage unit may be a memory.

Optionally, the communication apparatus 1400 may be a chip or a chip module.

Optionally, the obtaining unit 1401, the measurement unit 1402, and the sending unit 1403 may be integrated into a same unit, or may be integrated into different units.

For example, the obtaining unit 1401 and the sending unit 1403 may be integrated into a communication unit, and the measurement unit 1402 may be integrated into a processing unit. The communication unit may be a communication interface, a transceiver, a transceiver circuit, or the like.

For another example, the obtaining unit 1401, the measurement unit 1402, and the sending unit 1403 may be integrated into a processing unit.

It should be noted that the processing unit may be a processor or a controller, for example, may be a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various example logical blocks, modules, and circuits described with reference to content disclosed in embodiments of this application. The processing unit may alternatively be a combination for implementing a computing function, for example, a combination of one or more microprocessors or a combination of a DSP and a microprocessor.

Optionally, the communication apparatus 1400 is configured to perform any step performed by the terminal device/chip/chip module or the like in the foregoing method embodiments.

During specific implementation, the obtaining unit 1401, the measurement unit 1402, and the sending unit 1403 are configured to perform any step in the foregoing method embodiments, and may optionally invoke, when performing an action like sending, another unit to complete a corresponding operation. Details are described in the following.

The obtaining unit 1401 is configured to obtain configuration information.

The measurement unit 1402 is configured to measure at least one pilot signal based on the configuration information, to obtain at least one timing drift rate and/or at least one timing offset, where the at least one timing drift rate and/or the at least one timing offset are/is in a one-to-one correspondence with the at least one pilot signal, and each of the at least one pilot signal corresponds to one network device.

The sending unit 1403 is configured to send first feedback information and/or second feedback information, where the first feedback information indicates the at least one timing drift rate, and the second feedback information indicates the at least one timing offset.

It can be learned that in multi-satellite communication, the terminal device may measure a pilot signal of each of one or more network devices, to obtain a timing drift rate and/or a timing offset corresponding to each pilot signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at the terminal device, to improve communication quality through coherent superposition.

It should be noted that, for a specific implementation of each operation in the embodiment in FIG. 14, refer to the description in the foregoing method embodiment. Details are not described herein again.

### [Some possible implementations]

The following describes some possible implementations. For some specific descriptions, refer to the foregoing descriptions. Details are not described herein again.

Optionally, the configuration information includes at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

Optionally, the second information includes at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

Optionally, in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

Optionally, when the terminal device performs measurement in the measurement window, at least one of the following is satisfied: downlink timing keeps continuous, a frequency offset compensation amount remains unchanged, or a sampling rate remains unchanged.

Optionally, the format of the at least one pilot signal includes at least one of the following: a sequence of the at least one pilot signal, a time-frequency resource position of the at least one pilot signal, or a port of the at least one pilot signal.

Optionally, the third information indicates a first absolute feedback manner, and the first absolute feedback manner indicates that the first feedback information includes the at least one timing drift rate; or
the third information indicates a first relative feedback manner, and the first relative feedback manner indicates that the first feedback information includes a difference between the at least one timing drift rate and a reference timing drift rate.

Optionally, the at least one timing drift rate is represented by using a sampling rate proportion relationship.

Optionally, the reference timing drift rate is a first reference value configured or preconfigured in the network; or
the reference timing drift rate is a timing drift rate corresponding to a reference pilot signal in the at least one pilot signal.

Optionally, the fourth information indicates a second absolute feedback manner, and the second absolute feedback manner indicates that the second feedback information includes the at least one timing offset; or
the fourth information indicates a second relative feedback manner, and the second relative feedback manner indicates that the second feedback information includes a difference between the at least one timing offset and a reference timing offset.

Optionally, the reference timing offset is a second reference value configured or preconfigured in the network; or
the reference timing offset is a timing offset corresponding to the reference pilot signal in the at least one pilot signal.

Optionally, a timing offset corresponding to the at least one pilot signal includes:
a timing offset corresponding to at least one pilot symbol of each of the at least one pilot signal; and/or
a timing offset corresponding to each of the at least one pilot signal on a symbol of a timing reference point.

Optionally, the time-domain position of the timing reference point is represented by a symbol.

Optionally, the timing offset corresponding to each of the at least one pilot signal on the symbol of the timing reference point is determined based on a moment at which the symbol of the timing reference point is located, timing offsets respectively corresponding to at least two pilot symbols of each of the at least one pilot signal, or moments at which the at least two pilot symbols are located.

Optionally, the at least one timing drift rate is determined based on timing offsets respectively corresponding to two consecutive pilot symbols of each of the at least one pilot signal and a time interval between the two consecutive pilot symbols.

### 4. Example description of functional units of another communication apparatus

### [Description]

The foregoing mainly describes solutions in embodiments of this application from a method perspective. It may be understood that, to implement the foregoing functions, the network device includes a corresponding hardware structure and/or software module for performing the functions. A person skilled in the art should easily be aware that, in combination with the examples described in embodiments disclosed in this specification, units and algorithm steps can be implemented by hardware or a combination of hardware and computer software in embodiments. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments.

In embodiments of this application, functional unit division may be performed on the network device based on the foregoing method examples. For example, each functional unit may be obtained through division based on a corresponding function, or two or more functions may be integrated into one processing unit. The integrated unit may be implemented in a form of hardware, or may be implemented in a form of a software program module. It should be noted that, in embodiments of this application, unit division is an example, and is merely a logical function division. During actual implementation, another division manner may be used.

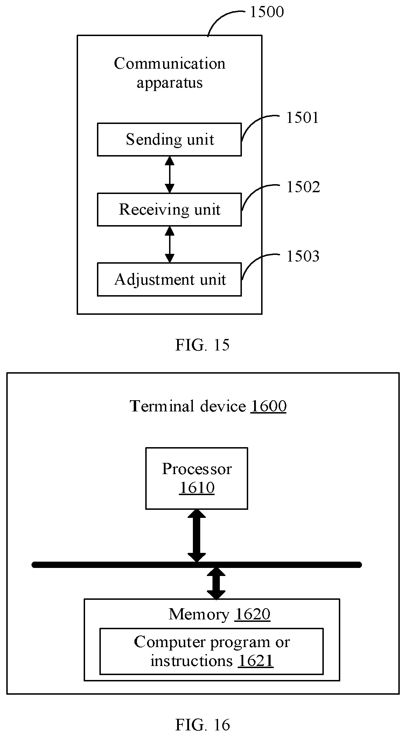

When an integrated unit is used, FIG. 15 is a composition block diagram of functional units of another communication apparatus according to an embodiment of this application. The communication apparatus 1500 includes a sending unit 1501, a receiving unit 1502, and an adjustment unit 1503.

Optionally, the sending unit 1501 may be a module unit configured to send a signal, information, or the like. This is not specifically limited.

Optionally, the receiving unit 1502 may be a module unit configured to receive a signal, information, or the like. This is not specifically limited.

Optionally, the adjustment unit 1503 may be a module unit configured to adjust a signal, information, or the like. This is not specifically limited.

Optionally, the communication apparatus 1500 may further include a storage unit that is configured to store computer program code or instructions executed by the communication apparatus 1500. The storage unit may be a memory.

Optionally, the communication apparatus 1500 may be a chip or a chip module.

Optionally, the sending unit 1501, the receiving unit 1502, and the adjustment unit 1503 may be integrated into a same unit, or may be integrated into different units.

For example, the sending unit 1501, the receiving unit 1502, and the adjustment unit 1503 may be integrated into a communication unit. The communication unit may be a communication interface, a transceiver, a transceiver circuit, or the like.

For another example, the sending unit 1501 and the receiving unit 1502 may be integrated into the communication unit, and the adjustment unit 1503 may be integrated into a processing unit.

It should be noted that the processing unit may be a processor or a controller, for example, may be a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various example logical blocks, modules, and circuits described with reference to content disclosed in embodiments of this application. The processing unit may alternatively be a combination for implementing a computing function, for example, a combination of one or more microprocessors or a combination of a DSP and a microprocessor.

Optionally, the communication apparatus 1500 is configured to perform any step or the like performed by the chip/chip module/network device or the like in the foregoing method embodiments.

During specific implementation, the sending unit 1501, the receiving unit 1502, and the adjustment unit 1503 are configured to perform any step in the foregoing method embodiments, and may optionally invoke, when performing an action like sending, another unit to complete a corresponding operation. Details are described in the following.

The sending unit 1501 is configured to send a first pilot signal.

The receiving unit 1502 is configured to receive first feedback information and/or second feedback information, where the first feedback information indicates at least one timing drift rate, the second feedback information indicates at least one timing offset, the at least one timing drift rate and/or the at least one timing offset are/is in a one-to-one correspondence with at least one pilot signal, each of the at least one pilot signal corresponds to one network device, and the at least one pilot signal includes the first pilot signal.

The adjustment unit 1503 is configured to perform resampling and/or timing adjustment on a downlink signal based on the first feedback information and/or the second feedback information.

It can be learned that in multi-satellite communication, the terminal device may measure a pilot signal of each of one or more network devices, to obtain a timing drift rate and/or a timing offset corresponding to each pilot signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at the terminal device, to improve communication quality through coherent superposition.

It should be noted that, for a specific implementation of each operation in the embodiment in FIG. 15, refer to the description in the foregoing method embodiment. Details are not described herein again.

### [Some possible implementations]

Optionally, before sending the first pilot signal, the sending unit 1501 is further configured to send configuration information.

The configuration information includes at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

Optionally, the second information includes at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

Optionally, in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

Optionally, when the terminal device performs measurement in the measurement window, the measurement window is used to indicate that at least one of the following is satisfied: downlink timing keeps continuous, a frequency offset compensation amount remains unchanged, or a sampling rate remains unchanged.

Optionally, the format of the at least one pilot signal includes at least one of the following: a sequence of the at least one pilot signal, a time-frequency resource position of the at least one pilot signal, or a port of the at least one pilot signal.

Optionally, the third information indicates a first absolute feedback manner, and the first absolute feedback manner indicates that the first feedback information includes the at least one timing drift rate; or
the third information indicates a first relative feedback manner, and the first relative feedback manner indicates that the first feedback information includes a difference between the at least one timing drift rate and a reference timing drift rate.

Optionally, the at least one timing drift rate is represented by using a sampling rate proportion relationship.

Optionally, the reference timing drift rate is a first reference value configured or preconfigured in the network; or
the reference timing drift rate is a timing drift rate corresponding to a reference pilot signal in the at least one pilot signal.

Optionally, the fourth information indicates a second absolute feedback manner, and the second absolute feedback manner indicates that the second feedback information includes the at least one timing offset; or
the fourth information indicates a second relative feedback manner, and the second relative feedback manner indicates that the second feedback information includes a difference between the at least one timing offset and a reference timing offset.

Optionally, the reference timing offset is a second reference value configured or preconfigured in the network; or
the reference timing offset is a timing offset corresponding to the reference pilot signal in the at least one pilot signal.

Optionally, the at least one timing offset includes:
a timing offset corresponding to at least one pilot symbol of each of the at least one pilot signal; and/or
a timing offset corresponding to each of the at least one pilot signal on a symbol of a timing reference point.

Optionally, the time-domain position of the timing reference point is represented by a symbol.

### 5. Example description of a structure of a terminal device

FIG. 16 is a diagram of a structure of a terminal device according to an embodiment of this application. The terminal device 1600 may include a processor 1610, a memory 1620, and a communication bus configured to connect the processor 1610 and the memory 1620.

Optionally, the memory 1620 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1420 is configured to store program code executed by the terminal device 1600 and data transmitted by the terminal device 1600.

Optionally, the terminal device 1600 further includes a communication interface that is configured to receive and send data.

Optionally, the terminal device 1600 may be the foregoing first terminal device.

Optionally, the processor 1610 may be one or more CPUs. When the processor 1610 is one CPU, the CPU may be a single-core CPU, or may be a multi-core CPU.

Optionally, the processor 1610 may be a baseband chip, a chip, a CPU, a general-purpose processor, a DSP, an ASIC, an FPGA or another programmable logic device, a transistor logic device, a hardware component, or any combination thereof.

During specific implementation, the processor 1610 in the terminal device 1600 is configured to execute a computer program or instructions 1621 stored in the memory 1620, to perform the following operations:
receiving configuration information;
measuring a pilot signal of each of one or more network devices based on the configuration information, to obtain a timing drift rate and/or a timing offset corresponding to each pilot signal; and
sending first feedback information and/or second feedback information, where the first feedback information indicates the timing drift rate corresponding to each pilot signal, and the second feedback information indicates the timing offset corresponding to each pilot signal.

It can be learned that in multi-satellite communication, the terminal device may measure a pilot signal of each of one or more network devices, to obtain a timing drift rate and/or a timing offset corresponding to each pilot signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at the terminal device, to improve communication quality through coherent superposition.

It should be noted that, for a specific implementation of each operation, refer to corresponding descriptions of the foregoing method embodiments. The terminal device 1600 may be configured to perform the foregoing method embodiments in embodiments. Details are not described again.

### 6. Example description of a structure of a network device

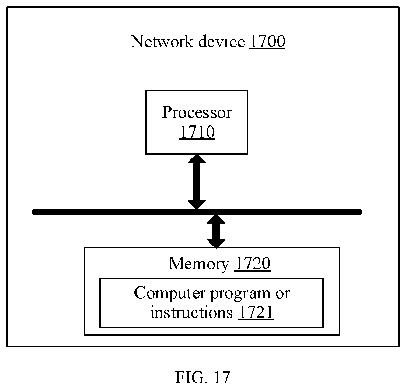

FIG. 17 is a diagram of a structure of a network device according to an embodiment of this application. The network device 1700 includes a processor 1710, a memory 1720, and a communication bus configured to connect the processor 1710 and the memory 1720.

Optionally, the memory 1720 includes but is not limited to a RAM, a ROM, an EPROM, or a CD-ROM, and the memory 1720 is configured to store related instructions and data.

Optionally, the network device 1700 further includes a communication interface that is configured to receive and send data.

Optionally, the processor 1710 may be one or more CPUs. When the processor 1710 is one CPU, the CPU may be a single-core CPU, or may be a multi-core CPU.

Optionally, the processor 1710 may be a baseband chip, a chip, a CPU, a general-purpose processor, a DSP, an ASIC, an FPGA or another programmable logic device, a transistor logic device, a hardware component, or any combination thereof.

Optionally, the processor 1710 in the network device 1700 is configured to execute a computer program or instructions 1721 stored in the memory 1720, to perform the following operations:
receiving first feedback information and/or second feedback information, where the first feedback information indicates a timing drift rate corresponding to a pilot signal of each of one or more network devices, and the second feedback information indicates a timing offset corresponding to the pilot signal of each of the one or more network devices; and
performing resampling and/or timing adjustment on a downlink signal based on the first feedback information and/or the second feedback information.

It can be learned that in multi-satellite communication, a terminal device may measure a pilot signal of each of one or more network devices, to obtain a timing drift rate and/or a timing offset corresponding to each pilot signal, and then feed back these timing drift rates and/or timing offsets to the one or more network devices.

Correspondingly, the one or more network devices may perform resampling rate adjustment and/or timing adjustment on to-be-delivered downlink signals based on these timing drift rates and/or timing offsets, to implement phase-level calibration in the multi-satellite communication. In addition, by performing resampling rate adjustment and/or timing adjustment on a downlink signal of each of the one or more network devices, adjusted downlink signals can be coherently superposed after arriving at the terminal device, to improve communication quality through coherent superposition.

It should be noted that, for a specific implementation of each operation, refer to corresponding descriptions of the foregoing method embodiments. The network device 1700 may be configured to perform the foregoing method embodiments in embodiments. Details are not described again.

### 7. Other related example descriptions

Optionally, the foregoing method embodiments may be applied to a terminal device or a component in a terminal device. In other words, the foregoing method embodiments may be performed by the terminal device, or may be performed by a chip, a chip module, a module, or the like. This is not specifically limited.

Optionally, the foregoing method embodiments may be applied to a network device or a component in a network device. In other words, the foregoing method embodiments may be performed by the network device, or may be performed by a chip, a chip module, a module, or the like. This is not specifically limited.

An embodiment of this application further provides a chip that includes a processor, a memory, and a computer program or instructions stored in the memory. The processor executes the computer program or the instructions to implement the steps described in the foregoing method embodiments.

An embodiment of this application further provides a chip module that includes a transceiver component and a chip. The chip includes a processor, a memory, and a computer program or instructions stored in the memory. The processor executes the computer program or the instructions to implement the steps described in the foregoing method embodiments.

An embodiment of this application further provides a computer-readable storage medium. The computer-readable storage medium stores a computer program or instructions. When the computer program or the instructions are executed, the steps described in the foregoing method embodiments are implemented.

An embodiment of this application further provides a computer program product that includes a computer program or instructions. When the computer program or the instructions are executed, the steps described in the foregoing method embodiments are implemented.

An embodiment of this application further provides a communication system that includes the foregoing terminal device and the foregoing network device.

It should be noted that, for ease of description, the foregoing embodiments are all described as a combination of a series of actions. A person skilled in the art should learn of that this application is not limited to the described action sequence, because some steps in embodiments of this application may be performed in another sequence or simultaneously. In addition, a person skilled in the art should also learn of that embodiments described in this specification are all example embodiments, and related actions, steps, modules, units, or the like are not necessarily mandatory in embodiments of this application.

In the foregoing embodiments, descriptions of each embodiment in embodiments of this application has respective focuses. For a part that is not described in detail in an embodiment, refer to related descriptions in another embodiment.

Methods or algorithm steps described in embodiments of this application may be implemented by hardware, or may be implemented by a processor by executing software instructions. The software instructions may include a corresponding software module. The software module may be stored in a RAM, a flash memory, a ROM, an EPROM, an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal device or a management device. Certainly, the processor and the storage medium may exist in the terminal device or the management device as discrete components.

A person skilled in the art should be aware that, in the foregoing one or more examples, the functions described in embodiments of this application may be completely or partially implemented by using software, hardware, firmware, or any combination thereof. When software is used to implement embodiments, all or a part of the embodiments may be implemented in a form of computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The modules/units included in the apparatuses and products described in the foregoing embodiments may be software modules/units, or may be hardware modules/units, or may be partially software modules/units and partially hardware modules/units. For example, for each apparatus or product applied to or integrated into a chip, all modules/units included in the apparatus or product may be implemented by using hardware like a circuit. Alternatively, at least a part of modules/units may be implemented by using a software program. The software program is run on a processor integrated into the chip, and remaining (if any) modules/units may be implemented by using hardware like a circuit. For each apparatus or product applied to or integrated into a chip module, all modules/units included in the apparatus or product may be implemented by using hardware like a circuit, and different modules/units may be located in a same component (for example, a chip or a circuit module) or different components of the chip module. Alternatively, at least a part of modules/units may be implemented by using a software program. The software program is run on a processor integrated into the chip module, and remaining (if any) modules/units may be implemented by using hardware like a circuit. For each apparatus or product applied to or integrated into a terminal device, all modules/units included in the apparatus or product may be implemented by using hardware like a circuit, and different modules/units may be located in a same component (for example, a chip or a circuit module) or different components of the terminal device. Alternatively, at least a part of modules/units may be implemented by using a software program. The software program is run on a processor integrated into the terminal device, and remaining (if any) modules/units may be implemented by using hardware like a circuit.

In the foregoing specific implementations, the objectives, technical solutions, and beneficial effects of embodiments of this application are further described in detail. It should be understood that the foregoing descriptions are merely specific implementations of embodiments of this application, but are not intended to limit the protection scope of embodiments of this application. Any modification, equivalent replacement, improvement, or the like made based on the technical solutions of embodiments of this application shall fall within the protection scope of embodiments of this application.

## Claims

1. A communication method, comprising:
obtaining configuration information;
measuring at least one pilot signal based on the configuration information, to obtain at least one timing drift rate and/or at least one timing offset, wherein the at least one timing drift rate and/or the at least one timing offset are/is in a one-to-one correspondence with the at least one pilot signal, and each of the at least one pilot signal corresponds to one network device; and
sending first feedback information and/or second feedback information, wherein the first feedback information indicates the at least one timing drift rate, and the second feedback information indicates the at least one timing offset.

2. The method according to claim 1, wherein the configuration information comprises at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

3. The method according to claim 2, wherein the second information comprises at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

4. The method according to claim 2 or 3, wherein in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

5. The method according to any one of claims 2 to 4, wherein when a terminal device performs measurement in the measurement window, at least one of the following is satisfied: downlink timing keeps continuous, a frequency offset compensation amount remains unchanged, or a sampling rate remains unchanged.

6. The method according to any one of claims 2 to 5, wherein the format of the at least one pilot signal comprises at least one of the following: a sequence of the at least one pilot signal, a time-frequency resource position of the at least one pilot signal, or a port of the at least one pilot signal.

7. The method according to any one of claims 2 to 6, wherein the third information indicates a first absolute feedback manner, and the first absolute feedback manner indicates that the first feedback information comprises the at least one timing drift rate; or
the third information indicates a first relative feedback manner, and the first relative feedback manner indicates that the first feedback information comprises a difference between the at least one timing drift rate and a reference timing drift rate.

8. The method according to claim 7, wherein the at least one timing drift rate is represented by using a sampling rate proportion relationship.

9. The method according to claim 7, wherein the reference timing drift rate is a first reference value configured or preconfigured in a network; or
the reference timing drift rate is a timing drift rate corresponding to a reference pilot signal in the at least one pilot signal.

10. The method according to any one of claims 2 to 9, wherein the fourth information indicates a second absolute feedback manner, and the second absolute feedback manner indicates that the second feedback information comprises the at least one timing offset; or
the fourth information indicates a second relative feedback manner, and the second relative feedback manner indicates that the second feedback information comprises a difference between the at least one timing offset and a reference timing offset.

11. The method according to claim 10, wherein the reference timing offset is a second reference value configured or preconfigured in the network; or
the reference timing offset is a timing offset corresponding to the reference pilot signal in the at least one pilot signal.

12. The method according to any one of claims 1 to 11, wherein the at least one timing offset comprises:
a timing offset corresponding to at least one pilot symbol of each of the at least one pilot signal; and/or
a timing offset corresponding to each of the at least one pilot signal on a symbol of a timing reference point.

13. The method according to claim 12, wherein a time-domain position of the timing reference point is represented by a symbol.

14. The method according to claim 12, wherein the timing offset corresponding to each of the at least one pilot signal on the symbol of the timing reference point is determined based on a moment at which the symbol of the timing reference point is located, timing offsets respectively corresponding to at least two pilot symbols of each of the at least one pilot signal, or moments at which the at least two pilot symbols are located.

15. The method according to any one of claims 1 to 14, wherein the at least one timing drift rate is determined based on timing offsets respectively corresponding to two consecutive pilot symbols of each of the at least one pilot signal and a time interval between the two consecutive pilot symbols.

16. A communication method, comprising:
sending a first pilot signal;
receiving first feedback information and/or second feedback information, wherein the first feedback information indicates at least one timing drift rate, the second feedback information indicates at least one timing offset, the at least one timing drift rate and/or the at least one timing offset are/is in a one-to-one correspondence with at least one pilot signal, each of the at least one pilot signal corresponds to one network device, and the at least one pilot signal comprises the first pilot signal; and
performing resampling and/or timing adjustment on a downlink signal based on the first feedback information and/or the second feedback information.

17. The method according to claim 16, wherein before sending the first pilot signal, the method further comprises:
sending configuration information, wherein
the configuration information comprises at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

18. The method according to claim 17, wherein the second information comprises at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

19. The method according to claim 17 or 18, wherein in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

20. The method according to any one of claims 17 to 19, wherein when a terminal device performs measurement in the measurement window, the measurement window is used to indicate that at least one of the following is satisfied: downlink timing keeps continuous, a frequency offset compensation amount remains unchanged, or a sampling rate remains unchanged.

21. The method according to any one of claims 17 to 20, wherein the format of the at least one pilot signal comprises at least one of the following: a sequence of the at least one pilot signal, a time-frequency resource position of the at least one pilot signal, or a port of the at least one pilot signal.

22. The method according to any one of claims 17 to 21, wherein the third information indicates a first absolute feedback manner, and the first absolute feedback manner indicates that the first feedback information comprises the at least one timing drift rate; or
the third information indicates a first relative feedback manner, and the first relative feedback manner indicates that the first feedback information comprises a difference between the at least one timing drift rate and a reference timing drift rate.

23. The method according to claim 22, wherein a timing drift rate corresponding to the at least one pilot signal is represented by using a sampling rate proportion relationship.

24. The method according to claim 22, wherein the reference timing drift rate is a first reference value configured or preconfigured in a network; or
the reference timing drift rate is a timing drift rate corresponding to a reference pilot signal in the at least one pilot signal.

25. The method according to any one of claims 17 to 24, wherein the fourth information indicates a second absolute feedback manner, and the second absolute feedback manner indicates that the second feedback information comprises the at least one timing offset; or
the fourth information indicates a second relative feedback manner, and the second relative feedback manner indicates that the second feedback information comprises a difference between the at least one timing offset and a reference timing offset.

26. The method according to claim 25, wherein the reference timing offset is a second reference value configured or preconfigured in the network; or
the reference timing offset is a timing offset corresponding to the reference pilot signal in the at least one pilot signal.

27. The method according to any one of claims 16 to 26, wherein a timing offset corresponding to the at least one pilot signal comprises:
a timing offset corresponding to at least one pilot symbol of each of the at least one pilot signal; and/or
a timing offset corresponding to each of the at least one pilot signal on a symbol of a timing reference point.

28. The method according to claim 27, wherein a time-domain position of the timing reference point is represented by a symbol.

29. A communication apparatus, comprising:
an obtaining unit, configured to obtain configuration information;
a measurement unit, configured to measure at least one pilot signal based on the configuration information, to obtain at least one timing drift rate and/or at least one timing offset, wherein the at least one timing drift rate and/or the at least one timing offset are/is in a one-to-one correspondence with the at least one pilot signal, and each of the at least one pilot signal corresponds to one network device; and
a sending unit, configured to send first feedback information and/or second feedback information, wherein the first feedback information indicates the at least one timing drift rate, and the second feedback information indicates the at least one timing offset.

30. The apparatus according to claim 29, wherein the configuration information comprises at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

31. The apparatus according to claim 30, wherein the second information comprises at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

32. The apparatus according to claim 30 or 31, wherein in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

33. The apparatus according to any one of claims 30 to 32, wherein when a terminal device performs measurement in the measurement window, at least one of the following is satisfied: downlink timing keeps continuous, a frequency offset compensation amount remains unchanged, or a sampling rate remains unchanged.

34. The apparatus according to any one of claims 30 to 33, wherein the format of the at least one pilot signal comprises at least one of the following: a sequence of the at least one pilot signal, a time-frequency resource position of the at least one pilot signal, or a port of the at least one pilot signal.

35. The apparatus according to any one of claims 30 to 34, wherein the third information indicates a first absolute feedback manner, and the first absolute feedback manner indicates that the first feedback information comprises the at least one timing drift rate; or
the third information indicates a first relative feedback manner, and the first relative feedback manner indicates that the first feedback information comprises a difference between the at least one timing drift rate and a reference timing drift rate.

36. The apparatus according to claim 35, wherein the at least one timing drift rate is represented by using a sampling rate proportion relationship.

37. The apparatus according to claim 35, wherein the reference timing drift rate is a first reference value configured or preconfigured in a network; or
the reference timing drift rate is a timing drift rate corresponding to a reference pilot signal in the at least one pilot signal.

38. The apparatus according to any one of claims 30 to 37, wherein the fourth information indicates a second absolute feedback manner, and the second absolute feedback manner indicates that the second feedback information comprises the at least one timing offset; or
the fourth information indicates a second relative feedback manner, and the second relative feedback manner indicates that the second feedback information comprises a difference between the at least one timing offset and a reference timing offset.

39. The apparatus according to claim 38, wherein the reference timing offset is a second reference value configured or preconfigured in the network; or
the reference timing offset is a timing offset corresponding to the reference pilot signal in the at least one pilot signal.

40. The apparatus according to any one of claims 29 to 39, wherein the at least one timing offset comprises:
a timing offset corresponding to at least one pilot symbol of each of the at least one pilot signal; and/or
a timing offset corresponding to each of the at least one pilot signal on a symbol of a timing reference point.

41. The apparatus according to claim 40, wherein a time-domain position of the timing reference point is represented by a symbol.

42. The apparatus according to claim 40, wherein the timing offset corresponding to each of the at least one pilot signal on the symbol of the timing reference point is determined based on a moment at which the symbol of the timing reference point is located, timing offsets respectively corresponding to at least two pilot symbols of each of the at least one pilot signal, or moments at which the at least two pilot symbols are located.

43. The apparatus according to any one of claims 29 to 42, wherein the at least one timing drift rate is determined based on timing offsets respectively corresponding to two consecutive pilot symbols of each of the at least one pilot signal and a time interval between the two consecutive pilot symbols.

44. A communication apparatus, comprising:
a sending unit, configured to send a first pilot signal;
a receiving unit, configured to receive first feedback information and/or second feedback information, wherein the first feedback information indicates at least one timing drift rate, the second feedback information indicates at least one timing offset, the at least one timing drift rate and/or the at least one timing offset are/is in a one-to-one correspondence with at least one pilot signal, each of the at least one pilot signal corresponds to one network device, and the at least one pilot signal comprises the first pilot signal; and
an adjustment unit, configured to perform resampling and/or timing adjustment on a downlink signal based on the first feedback information and/or the second feedback information.

45. The apparatus according to claim 44, wherein before sending the first pilot signal, the apparatus is further configured to:
send configuration information, wherein
the configuration information comprises at least one of the following:
first information, used to configure a format of the at least one pilot signal;
second information, used to configure a measurement window;
third information, used to configure a feedback manner of the at least one timing drift rate; or
fourth information, used to configure a feedback manner of the at least one timing offset.

46. The apparatus according to claim 45, wherein the second information comprises at least one of the following:
the format of the at least one pilot signal associated with the measurement window;
a start position of the measurement window;
a length of the measurement window;
an end position of the measurement window;
a periodicity of the measurement window; or
a timing reference point associated with the measurement window.

47. The apparatus according to claim 45 or 46, wherein in the measurement window, the at least one pilot signal satisfies at least one of the following:
a carrier phase of the at least one pilot signal keeps continuous, downlink timing of the at least one pilot signal keeps continuous, a frequency of the at least one pilot signal keeps continuous, or a sampling rate of the at least one pilot signal keeps continuous.

48. The apparatus according to any one of claims 45 to 47, wherein when a terminal device performs measurement in the measurement window, the measurement window is used to indicate that at least one of the following is satisfied: downlink timing keeps continuous, a frequency offset compensation amount remains unchanged, or a sampling rate remains unchanged.

49. The apparatus according to any one of claims 45 to 48, wherein the format of the at least one pilot signal comprises at least one of the following: a sequence of the at least one pilot signal, a time-frequency resource position of the at least one pilot signal, or a port of the at least one pilot signal.

50. The apparatus according to any one of claims 45 to 49, wherein the third information indicates a first absolute feedback manner, and the first absolute feedback manner indicates that the first feedback information comprises the at least one timing drift rate; or
the third information indicates a first relative feedback manner, and the first relative feedback manner indicates that the first feedback information comprises a difference between the at least one timing drift rate and a reference timing drift rate.

51. The apparatus according to claim 50, wherein a timing drift rate corresponding to the at least one pilot signal is represented by using a sampling rate proportion relationship.

52. The apparatus according to claim 50, wherein the reference timing drift rate is a first reference value configured or preconfigured in a network; or
the reference timing drift rate is a timing drift rate corresponding to a reference pilot signal in the at least one pilot signal.

53. The apparatus according to any one of claims 45 to 52, wherein the fourth information indicates a second absolute feedback manner, and the second absolute feedback manner indicates that the second feedback information comprises the at least one timing offset; or
the fourth information indicates a second relative feedback manner, and the second relative feedback manner indicates that the second feedback information comprises a difference between the at least one timing offset and a reference timing offset.

54. The apparatus according to claim 53, wherein the reference timing offset is a second reference value configured or preconfigured in the network; or
the reference timing offset is a timing offset corresponding to the reference pilot signal in the at least one pilot signal.

55. The apparatus according to any one of claims 16 to 26, wherein a timing offset corresponding to the at least one pilot signal comprises:
a timing offset corresponding to at least one pilot symbol of each of the at least one pilot signal; and/or
a timing offset corresponding to each of the at least one pilot signal on a symbol of a timing reference point.

56. The apparatus according to claim 55, wherein a time-domain position of the timing reference point is represented by a symbol.

57. A terminal device, comprising a processor, a memory, and a computer program or instructions stored in the memory, wherein the processor executes the computer program or the instructions to implement the steps of the method according to any one of claims 1 to 15.

58. A network device, comprising a processor, a memory, and a computer program or instructions stored in the memory, wherein the processor executes the computer program or the instructions to implement the steps of the method according to any one of claims 16 to 28.

59. A chip, comprising a processor, wherein the processor performs the steps of the method according to any one of claims 1 to 28.

60. A communication system, comprising the terminal device according to claim 31 and the network device according to claim 32.

61. A chip module, comprising a transceiver component and a chip, wherein the chip comprises a processor, and the processor performs the steps of the method according to any one of claims 1 to 28.

62. A computer-readable storage medium, wherein the computer-readable storage medium stores a computer program or instructions, and when the computer program or the instructions are executed, the steps of the method according to any one of claims 1 to 28 are performed.

63. A computer program product, comprising a computer program or instructions, wherein when the computer program or the instructions are executed, the steps of the method according to any one of claims 1 to 28 are performed.
